# EUROPEAN PATENT APPLICATION

(11) **EP 4 683 415 A1**
(43) Date of publication of application: **21.01.2026**
(21) Application number: 24777704.8
(22) Date of filing: 12.03.2024
(51) Int. Cl.: H04W 72/21

(54) **COMMUNICATION METHOD AND RELATED APPARATUS**

(30) Priority: 31.03.2023 CN 202310363534
(71) Applicant: Huawei Technologies Co., Ltd., Shenzhen, Guangdong 518129 (CN)
(72) Inventor: ZHU, Ningbo, Shenzhen, Guangdong 518129 (CN); HAO, Jinping, Shenzhen, Guangdong 518129 (CN)
(74) Representative: Thun, Clemens
(86) International application number: PCT/CN2024/081153
(87) International publication number: WO 2024/198914

(57) **Abstract**

Embodiments of this application disclose a communication method and a related apparatus, so that a first network device sends a first message to a first access network device, to indicate the first access network device to release a first positioning reference signal resource. In this way, the first positioning reference signal resource is released. The method in embodiments of this application includes: A first network device generates a first message, where the first message indicates to release a first positioning reference signal resource, the first positioning reference signal resource is a to-be-released positioning reference signal resource in a first positioning area, and the first access network device is an access network device in the first positioning area. The first network device sends the first message to the first access network device.

## Description

This application claims priority to Chinese Patent Application No. 202310363534.X, filed on March 31, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

A positioning function is an important function of 5th generation (5th generation, 5G) wireless communication new radio (new radio, NR). An access network device may configure a positioning reference signal resource for a terminal device. A positioning reference signal may be transmitted between the access network device and the terminal device on the positioning reference signal resource, to position the terminal device. However, when the terminal device releases, re-applies for, or updates the positioning reference signal resource, the positioning reference signal originally reserved by the access network device for the terminal device needs to be released. If the positioning reference signal resource is not released (that is, the positioning reference signal resource is always occupied), a cell capacity is affected, and a waste of resources is caused.

Therefore, how to release the positioning reference signal resource is an urgent problem to be resolved in this application.

### SUMMARY

This application provides a communication method and a related apparatus, so that a first network device sends a first message to a first access network device, to indicate the first access network device to release a first positioning reference signal resource.

A first aspect of this application provides a communication method. The method includes:
A first network device generates a first message, where the first message indicates to release a first positioning reference signal resource, the first positioning reference signal resource is a to-be-released positioning reference signal resource in a first positioning area, and a first access network device is an access network device in the first positioning area. The first network device sends the first message to the first access network device.

It can be learned from the foregoing technical solution that the first network device sends the first message to the first access network device. The first message indicates to release the first positioning reference signal resource. In this way, the first access network device releases the first positioning reference signal resource. The first positioning reference signal resource is the to-be-released positioning reference signal resource in the first positioning area, so that the first positioning reference signal resource is not always occupied. Therefore, impact on a cell capacity in the first positioning area is avoided, and resource utilization is improved.

A second aspect of this application provides a communication method. The method includes:
A first access network device receives a first message from a first network device, where the first message indicates the first access network device to release a first positioning reference signal resource, the first positioning reference signal resource is a to-be-released positioning reference signal resource in a first positioning area, and the first access network device is an access network device in the first positioning area. The first access network device releases the first positioning reference signal resource.

It can be learned from the foregoing technical solution that the first access network device receives the first message from the first network device, where the first message indicates the first access network device to release the first positioning reference signal resource. The first access network device releases the first positioning reference signal resource. The first positioning reference signal resource is the to-be-released positioning reference signal resource in the first positioning area, so that the first positioning reference signal resource is not always occupied. Therefore, impact on a cell capacity in the first positioning area is avoided, and resource utilization is improved.

Based on the first aspect or the second aspect, in a possible implementation, a format of the first message indicates to release the first positioning reference signal resource; or the first message includes first indication information, and the first indication information indicates to release the first positioning reference signal resource. In this way, the first message indicates to release the first positioning reference signal resource, to facilitate implementation of the solution. The format of the first message indicates to release the first positioning reference signal resource, to reduce signaling indication overheads. A value of the first indication information indicates to release the first positioning reference signal resource. Therefore, the value of the first indication information may be determined with reference to an actual requirement, to flexibly release or reserve a positioning reference signal resource.

Based on the first aspect, in a possible implementation, the method further includes: The first network device sends the first message to all access network devices except the first access network device in the first positioning area. Therefore, the access network device in the first positioning area releases the first positioning reference signal resource, to avoid a problem that a same positioning reference signal resource in the first positioning area is allocated to different terminal devices. Therefore, positioning measurement interference between different terminal devices is avoided.

Based on the first aspect, in a possible implementation, the method further includes: The first network device sends at least one of the following to the first access network device: a configuration of the first positioning reference signal resource, an identifier of the configuration of the first positioning reference signal resource, a first identifier, a second identifier, an identifier of the first positioning area, or an identifier of at least one cell, where the first identifier is an identifier used by the first network device to identify the first positioning reference signal resource, the second identifier is an identifier used by the first access network device to identify the first positioning reference signal resource, and the at least one cell belongs to the first positioning area. Therefore, the first access network device identifies the first positioning reference signal resource, and releases the first positioning reference signal resource. In addition, the first network device sends the identifier of the first positioning area and/or the identifier of the at least one cell to the first access network device. In this way, the first access network device determines areas covered by specific cells in which the first positioning reference signal resource is released.

Based on the second aspect, in a possible implementation, the method further includes: The first access network device receives at least one of the following sent by the first network device: a configuration of the first positioning reference signal resource, an identifier of the configuration of the first positioning reference signal resource, a first identifier, a second identifier, an identifier of the first positioning area, or an identifier of at least one cell, where the first identifier is an identifier used by the first network device to identify the first positioning reference signal resource, the second identifier is an identifier used by the first access network device to identify the first positioning reference signal resource, and the at least one cell belongs to the first positioning area. Therefore, the first access network device identifies the first positioning reference signal resource, and releases the first positioning reference signal resource. In addition, the first access network device may determine, based on the identifier of the first positioning area and/or the identifier of the at least one cell, areas covered by specific cells in which the first positioning reference signal resource is released.

Based on the first aspect, in a possible implementation, the method further includes: The first network device receives a second message from the first access network device, where the second message indicates that the first positioning reference signal resource is successfully released or fails to be released. Therefore, the first network device determines a release status of the first positioning reference signal resource.

Based on the second aspect, in a possible implementation, the method further includes: The first access network device sends the second message to the first network device, where the second message indicates that the first positioning reference signal resource is successfully released or fails to be released. Therefore, the first network device determines the release status of the first positioning reference signal resource.

Based on the first aspect or the second aspect, in a possible implementation, the first network device is a positioning device; or the first network device is a serving access network device of a terminal device.

Based on the first aspect, in a possible implementation, the first network device is a positioning device, and before the first network device generates the first message, the method further includes: The positioning device receives a positioning information update message or a positioning information response message from a second access network device, where the positioning information update message or the positioning information response message includes a configuration of a second positioning reference signal resource and/or information about a second positioning area, the configuration of the second positioning reference signal resource is different from the configuration of the first positioning reference signal resource, and/or the first positioning area is different from the second positioning area, the configuration of the second positioning reference signal resource and/or the information about the second positioning area are/is separately obtained through update or configuration of the second access network device for a terminal device, and the configuration of the first positioning reference signal resource and information about the first positioning area are separately used by the terminal device before the update or configuration, or the first positioning reference signal resource is a positioning reference signal resource that is no longer used or occupied by the terminal device after the update or configuration. The second access network device is a serving access network device of the terminal device.

In this implementation, the positioning device receives the positioning information update message or the positioning information response message from the second access network device, where the positioning information update message or the positioning information response message includes the configuration of the second positioning reference signal resource and/or the information about the second positioning area. It can be learned that the positioning device determines that the second access network device updates or configures a positioning reference signal resource for the terminal device. Therefore, the positioning device may determine to release the first positioning reference signal resource.

Based on the first aspect, in a possible implementation, before the positioning device receives the positioning information update message or the positioning information response message from the second access network device, the method further includes: The positioning device receives an update request from the terminal device, where the update request is used to request to update a positioning reference signal resource. The positioning device sends a positioning information request message to the second access network device, where the positioning information request message is used to request to configure a positioning reference signal resource for the terminal device. In this way, the positioning device requests the second access network device to update the positioning reference signal resource for the terminal device.

Based on the first aspect, in a possible implementation, the first network device is a positioning device, and before the first network device generates the first message, the method further includes: The positioning device receives a measurement failure message or a measurement failure indication message from a third access network device, where the measurement failure message or the measurement failure indication message indicates that the third access network device fails to measure a positioning reference signal sent by a terminal device on the first positioning reference signal resource. In this implementation, the positioning device receives the measurement failure message or the measurement failure indication message from the third access network device. Therefore, the positioning device may determine to release the first positioning reference signal resource. In this way, a case in which positioning measurement cannot be performed on the terminal device and a waste of resources is caused because the first positioning reference signal resource is always occupied is avoided.

Based on the first aspect, in a possible implementation, the first network device is a positioning device, and before the first network device generates the first message, the method further includes: The positioning device receives a positioning information update message from a second access network device, where the positioning information update message indicates that the terminal device stops sending a positioning reference signal on the first positioning reference signal resource. In this way, the positioning device may determine that the first positioning reference signal resource is no longer used. The positioning device may indicate the first access network device to release the first positioning reference signal resource. Therefore, a problem that a waste of resources is caused because the first positioning reference signal resource is always occupied is avoided.

Based on the first aspect, in a possible implementation, the first network device is a serving access network device of a terminal device, before the first network device generates the first message, the method further includes: The first network device determines a configuration of a second positioning reference signal resource and/or information about a second positioning area for the terminal device, where the configuration of the second positioning reference signal resource is different from the configuration of the first positioning reference signal resource, and/or the first positioning area is different from the second positioning area, and the configuration of the first positioning reference signal resource and information about the first positioning area are separately used by the terminal device before the first network device determines the configuration of the second positioning reference signal resource and/or the information about the second positioning area for the terminal device, or the first positioning reference signal resource is a positioning reference signal resource that is no longer used or occupied by the terminal device after the first network device determines the configuration of the second positioning reference signal resource and/or the information about the second positioning area for the terminal device. It can be learned that the second access network device determines that the terminal device updates or configures the positioning reference signal resource, so that the second access network device may determine to release the first positioning reference signal resource. Therefore, the problem that a waste of resources is caused because the first positioning reference signal resource is always occupied is avoided.

A third aspect of this application provides a communication method. The method includes:
A first network device generates a first message, where the first message is used to request a first access network device to reserve a first positioning reference signal resource, the first message includes information about a timer, the timer indicates reservation duration of the first positioning reference signal resource, the first positioning reference signal resource is a to-be-reserved positioning reference signal resource in a first positioning area, and the first access network device is an access network device in the first positioning area. The first network device sends the first message to the first access network device.

In the foregoing technical solution, the first network device sends the first message to the first access network device. The first message includes the information about the timer. The timer indicates the reservation duration of the first positioning reference signal resource. In this way, the first access network device determines the reservation duration of the first positioning reference signal resource with reference to the timer, so that the first access network device may release the first positioning reference signal resource when the timer expires. Therefore, the first positioning reference signal resource is not always occupied, and impact on a cell capacity in the first positioning area is avoided, to improve resource utilization.

Based on the third aspect, in a possible implementation, the method further includes: The first network device sends the first message to all access network devices except the first access network device in the first positioning area. Therefore, all the access network devices except the first access network device in the first positioning area reserve the first positioning reference signal resource within duration of the timer, to avoid a problem that a same positioning reference signal resource in the first positioning area is allocated to different terminal devices. Therefore, positioning measurement interference between different terminal devices is avoided.

A fourth aspect of this application provides a communication method. The method includes:
A first access network device receives a first message from a first network device, where the first message is used to request the first access network device to reserve a first positioning reference signal resource, the first message includes information about a timer, the timer indicates reservation duration of the first positioning reference signal resource, the first positioning reference signal resource is a to-be-reserved positioning reference signal resource in a first positioning area, and the first access network device is an access network device in the first positioning area. The first access network device reserves the first positioning reference signal resource. The first access network device starts the timer. When the timer expires, the first access network device releases the first positioning reference signal resource.

In the foregoing technical solution, the first access network device receives the first message from the first network device, where the first message includes the information about the timer. The timer indicates the reservation duration of the first positioning reference signal resource, so that the first access network device may release the first positioning reference signal resource when the timer expires. Therefore, the first positioning reference signal resource is not always occupied, and impact on a cell capacity in the first positioning area is avoided, to improve resource utilization.

Based on the fourth aspect, in a possible implementation, the method further includes: If the first access network device receives a release indication for the first positioning reference signal resource before the timer expires, the first access network device releases the first positioning reference signal resource. Therefore, a case in which low resource utilization is caused because the first positioning reference signal resource is always occupied is avoided.

Based on the third aspect or the fourth aspect, in a possible implementation, duration of the timer is determined by a second access network device, and the second access network device is a serving access network device of a terminal device; duration of the timer is determined by the positioning device; or duration of the timer is default duration. This shows several possible sources of the duration of the timer. Specifically, the duration of the timer may be determined by the second access network device or the positioning device, to help properly set the duration of the timer with reference to a positioning requirement. The duration of the timer may alternatively be the default, to simplify the solution and facilitate execution of the solution.

Based on the third aspect, in a possible implementation, the first network device is a positioning device, and before the first network device generates the first message, the method further includes: The positioning device receives at least one of the following from the second access network device: a configuration of the first positioning reference signal resource, an identifier of the configuration of the first positioning reference signal resource, information about the first positioning area, information about the timer, a first identifier, or a second identifier; and the configuration of the first positioning reference signal resource, the identifier of the configuration of the first positioning reference signal resource, the information about the first positioning area, and the information about the timer are obtained through update or configuration of the second access network device for the terminal device. The first identifier is an identifier used by the second access network device to identify the first positioning reference signal resource. The second identifier is an identifier used by the positioning device to identify the first positioning reference signal resource. The second access network device is a serving access network device of the terminal device. In this implementation, after the positioning device receives the foregoing information sent by the second access network device, the positioning device may determine that the access network device in the first positioning area needs to reserve the first positioning reference signal resource. Therefore, the positioning device may indicate, by using the first message, the first access network device to reserve the first positioning reference signal resource.

Based on the third aspect, in a possible manner, at least one of the configuration of the first positioning reference signal resource, the identifier of the configuration of the first positioning reference signal resource, the information about the first positioning area, the information about the timer, the first identifier, and the second identifier is carried in a positioning information update message. Existing signaling is used to carry the foregoing information, to help improve practicability of the solution.

Based on the third aspect or the fourth aspect, in a possible implementation, the first network device is a serving access network device of the terminal device, and before the first network device generates the first message, the method further includes: The first network device determines the configuration of the first positioning reference signal resource, the information about the first positioning area, and the information about the timer for the terminal device. It can be learned that the second access network device determines that the access network device in the first positioning area needs to reserve the first positioning reference signal resource. Therefore, the second access network device may indicate, by using the first message, the first access network device to reserve the first positioning reference signal resource.

A fifth aspect of this application provides a first communication apparatus. The apparatus includes:
a processing module, configured to generate a first message, where the first message indicates to release a first positioning reference signal resource, and the first positioning reference signal resource is a to-be-released positioning reference signal resource in a first positioning area; and
a transceiver module, configured to send the first message to a first access network device.

A sixth aspect of this application provides a second communication apparatus. The apparatus includes:
a transceiver module, configured to receive a first message from a first network device, where the first message indicates the second communication apparatus to release a first positioning reference signal resource, the first positioning reference signal resource is a to-be-released positioning reference signal resource in a first positioning area, and the second communication apparatus is an access network device in the first positioning area; and
a processing module, configured to release the first positioning reference signal resource.

Based on the fifth aspect or the sixth aspect, in a possible implementation, a format of the first message indicates to release the first positioning reference signal resource; or the first message includes first indication information, and the first indication information indicates to release the first positioning reference signal resource.

Based on the fifth aspect, in a possible implementation, the transceiver module is further configured to send the first message to all access network devices except the first access network device in the first positioning area.

Based on the fifth aspect, in a possible implementation, the transceiver module is further configured to send at least one of the following to the first access network device: a configuration of the first positioning reference signal resource, an identifier of the configuration of the first positioning reference signal resource, a first identifier, a second identifier, an identifier of the first positioning area, or an identifier of at least one cell, where the first identifier is an identifier used by the first communication apparatus to identify the first positioning reference signal resource, the second identifier is an identifier used by the first access network device to identify the first positioning reference signal resource, and the at least one cell belongs to the first positioning area.

Based on the sixth aspect, in a possible implementation, the transceiver module is further configured to receive at least one of the following sent by the first network device: a configuration of the first positioning reference signal resource, an identifier of the configuration of the first positioning reference signal resource, a first identifier, a second identifier, an identifier of the first positioning area, or an identifier of at least one cell, where the first identifier is an identifier used by the first network device to identify the first positioning reference signal resource, the second identifier is an identifier used by the second communication apparatus to identify the first positioning reference signal resource, and the at least one cell belongs to the first positioning area.

Based on the fifth aspect, in a possible implementation, the transceiver module is further configured to receive a second message from the first access network device, where the second message indicates that the first positioning reference signal resource is successfully released or fails to be released.

Based on the sixth aspect, in a possible implementation, the transceiver module is further configured to send a second message to the first network device, where the second message indicates that the first positioning reference signal resource is successfully released or fails to be released.

Based on the fifth aspect, in a possible implementation, the first communication apparatus is a positioning device; or the first communication apparatus is a serving access network device of a terminal device.

Based on the sixth aspect, in a possible implementation, the first network device is a positioning device; or the first network device is a serving access network device of a terminal device.

Based on the fifth aspect, in a possible implementation, the first communication apparatus is a positioning device; and the transceiver module is further configured to receive a positioning information update message or a positioning information response message from a second access network device, where the positioning information update message or the positioning information response message includes a configuration of a second positioning reference signal resource and/or information about a second positioning area, the configuration of the second positioning reference signal resource is different from the configuration of the first positioning reference signal resource, and/or the first positioning area is different from the second positioning area, the configuration of the second positioning reference signal resource and/or the information about the second positioning area are/is separately obtained through update or configuration of the second access network device for a terminal device, and the configuration of the first positioning reference signal resource and information about the first positioning area are separately used by the terminal device before the update or configuration, or the first positioning reference signal resource is a positioning reference signal resource that is no longer used or occupied by the terminal device after the update or configuration. The second access network device is a serving access network device of the terminal device.

Based on the fifth aspect, in a possible implementation, the transceiver module is further configured to receive an update request from the terminal device, where the update request is used to request to update a positioning reference signal resource; and send a positioning information request message to the second access network device, where the positioning information request message is used to request to configure a positioning reference signal resource for the terminal device.

Based on the fifth aspect, in a possible implementation, the first communication apparatus is a positioning device; and the transceiver module is further configured to receive a measurement failure message or a measurement failure indication message from a third access network device, where the measurement failure message or the measurement failure indication message indicates that the third access network device fails to measure a positioning reference signal sent by the terminal device on the first positioning reference signal resource.

Based on the fifth aspect, in a possible implementation, the first communication apparatus is a positioning device; and the transceiver module is further configured to receive a positioning information update message from the second access network device, where the positioning information update message indicates that the terminal device stops sending the positioning reference signal on the first positioning reference signal resource.

Based on the fifth aspect, in a possible implementation, the first communication apparatus is a serving access network device of a terminal device; and the processing module is further configured to determine a configuration of a second positioning reference signal resource and/or information about a second positioning area for the terminal device, where the configuration of the second positioning reference signal resource is different from the configuration of the first positioning reference signal resource, and/or the first positioning area is different from the second positioning area, and the configuration of the first positioning reference signal resource and information about the first positioning area are separately used by the terminal device before the processing module determines the configuration of the second positioning reference signal resource and/or the information about the second positioning area for the terminal device, or the first positioning reference signal resource is a positioning reference signal resource that is no longer used or occupied by the terminal device after the processing module determines the configuration of the second positioning reference signal resource and/or the information about the second positioning area for the terminal device.

A seventh aspect of this application provides a first communication apparatus. The apparatus includes:
a processing module, configured to generate a first message, where the first message is used to request a first access network device to reserve a first positioning reference signal resource, the first message includes information about a timer, the timer indicates reservation duration of the first positioning reference signal resource, the first positioning reference signal resource is a to-be-reserved positioning reference signal resource in a first positioning area, and the first access network device is an access network device in the first positioning area; and
a transceiver module, configured to send the first message to the first access network device.

Based on the seventh aspect, in a possible implementation, the transceiver module is further configured to send the first message to all access network devices except the first access network device in the first positioning area.

An eighth aspect of this application provides a second communication apparatus. The apparatus includes:
a transceiver module, configured to receive a first message from a first network device, where the first message is used to request the second communication apparatus to reserve a first positioning reference signal resource, the first message includes information about a timer, the timer indicates reservation duration of the first positioning reference signal resource, the first positioning reference signal resource is a to-be-reserved positioning reference signal resource in a first positioning area, and the second communication apparatus is an access network device in the first positioning area; and
a processing module, configured to reserve the first positioning reference signal resource; start the timer; and when the timer expires, release the first positioning reference signal resource.

Based on the eighth aspect, in a possible implementation, the processing module is further configured to: if the second communication apparatus receives a release indication for the first positioning reference signal resource before the timer expires, release the first positioning reference signal resource.

Based on the seventh aspect or the eighth aspect, in a possible implementation, duration of the timer is determined by a second access network device, and the second access network device is a serving access network device of a terminal device; duration of the timer is determined by a positioning device; or duration of the timer is default duration.

Based on the seventh aspect, in a possible implementation, a first communication apparatus is a positioning device; and the transceiver module is further configured to receive at least one of the following from the second access network device: a configuration of the first positioning reference signal resource, an identifier of the configuration of the first positioning reference signal resource, information about the first positioning area, the information about the timer, a first identifier, or a second identifier, where the configuration of the first positioning reference signal resource, the identifier of the configuration of the first positioning reference signal resource, the information about the first positioning area, and the information about the timer are obtained through update or configuration of the second access network device for the terminal device, the first identifier is an identifier used by the second access network device to identify the first positioning reference signal resource, the second identifier is an identifier used by the first communication apparatus to identify the first positioning reference signal resource, and the second access network device is a serving access network device of the terminal device.

Based on the seventh aspect, in a possible implementation, at least one of the configuration of the first positioning reference signal resource, the information about the first positioning area, the information about the timer, the first identifier, and the second identifier is carried in a positioning information update message.

Based on the seventh aspect, in a possible implementation, a first communication apparatus is a serving access network device of the terminal device; and the processing module is further configured to determine the configuration of the first positioning reference signal resource, the information about the first positioning area, and the information about the timer for the terminal device.

A ninth aspect of this application provides a communication apparatus. The communication apparatus includes a processor and a memory. The memory stores a computer program or computer instructions, and the processor is configured to invoke and run the computer program or the computer instructions stored in the memory, so that the processor implements any implementation in any one of the first aspect to the fourth aspect.

Optionally, the communication apparatus further includes a transceiver, and the processor is configured to control the transceiver to receive or send a signal.

A tenth aspect of this application provides a communication apparatus. The communication apparatus includes a processor. The processor is configured to invoke a computer program or computer instructions in a memory, so that the processor implements any implementation in any one of the first aspect to the fourth aspect.

Optionally, the communication apparatus further includes a transceiver, and the processor is configured to control the transceiver to receive or send a signal.

An eleventh aspect of this application provides a communication apparatus. The communication apparatus includes a processor, and the processor is configured to perform any implementation in any one of the first aspect to the fourth aspect.

A twelfth aspect of this application provides a computer program product including instructions. When the computer program product runs on a computer, the computer is enabled to perform any implementation in any one of the first aspect to the fourth aspect.

A thirteenth aspect of this application provides a computer-readable storage medium, including computer instructions. When the instructions are run on a computer, the computer is enabled to perform any implementation in any one of the first aspect to the fourth aspect.

A fourteenth aspect of this application provides a chip apparatus, including a processor, configured to invoke a computer program or computer instructions in a memory, so that the processor performs any implementation in any one of the first aspect to the fourth aspect.

Optionally, the processor is coupled to the memory through an interface.

A fifteenth aspect of this application provides a communication system. The communication system includes the first communication apparatus in the fifth aspect and the second communication apparatus in the sixth aspect; or the communication system includes the first communication apparatus in the seventh aspect and the second communication apparatus in the eighth aspect.

According to the foregoing technical solutions, it can be learned that embodiments of this application have the following advantages:

It can be learned from the foregoing technical solutions that the first network device generates the first message. The first message indicates to release the first positioning reference signal resource. The first positioning reference signal resource is the to-be-released positioning reference signal resource in the first positioning area. The first access network device is the access network device in the first positioning area. Then, the first network device sends the first message to the first access network device. It can be learned that the first network device sends the first message to the first access network device. The first message indicates to release the first positioning reference signal resource. In this way, the first access network device releases the first positioning reference signal resource, where the first positioning reference signal resource is the to-be-released positioning reference signal resource in the first positioning area. Therefore, impact on the cell capacity in the first positioning area is avoided, and resource utilization is improved.

### BRIEF DESCRIPTION OF DRAWINGS

FIG. 1 is a diagram of a communication system according to an embodiment of this application;
FIG. 2 is a diagram of a positioning area according to an embodiment of this application;
FIG. 3 is a diagram of a first embodiment of a communication method according to an embodiment of this application;
FIG. 4 is another diagram of a positioning area according to an embodiment of this application;
FIG. 5 is a diagram of a second embodiment of a communication method according to an embodiment of this application;
FIG. 6 is a diagram of a third embodiment of a communication method according to an embodiment of this application;
FIG. 7 is a diagram of a fourth embodiment of a communication method according to an embodiment of this application;
FIG. 8 is a diagram of a fifth embodiment of a communication method according to an embodiment of this application;
FIG. 9 is a diagram of a sixth embodiment of a communication method according to an embodiment of this application;
FIG. 10 is a diagram of a seventh embodiment of a communication method according to an embodiment of this application;
FIG. 11A and FIG. 11B are a diagram of an eighth embodiment of a communication method according to an embodiment of this application;
FIG. 12A and FIG. 12B are a diagram of a ninth embodiment of a communication method according to an embodiment of this application;
FIG. 13A and FIG. 13B are a diagram of a tenth embodiment of a communication method according to an embodiment of this application;
FIG. 14A and FIG. 14B are a diagram of an eleventh embodiment of a communication method according to an embodiment of this application;
FIG. 15 is a diagram of a structure of a communication apparatus according to an embodiment of this application;
FIG. 16 is another diagram of a structure of a communication apparatus according to an embodiment of this application;
FIG. 17 is still another diagram of a structure of a communication apparatus according to an embodiment of this application; and
FIG. 18 is yet another diagram of a structure of a communication apparatus according to an embodiment of this application.

### DESCRIPTION OF EMBODIMENTS

Embodiments of this application provide a communication method and a related apparatus, so that a first network device sends a first message to a first access network device, to indicate the first access network device to release a first positioning reference signal resource. In this way, the first positioning reference signal resource is released.

The following clearly and completely describes the technical solutions in embodiments of this application with reference to the accompanying drawings in embodiments of this application. It is clear that the described embodiments are merely some but not all of embodiments of this application. All other embodiments obtained by persons skilled in the art based on embodiments of this application without creative efforts shall fall within the protection scope of this application.

The term "and/or" in this application describes only an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

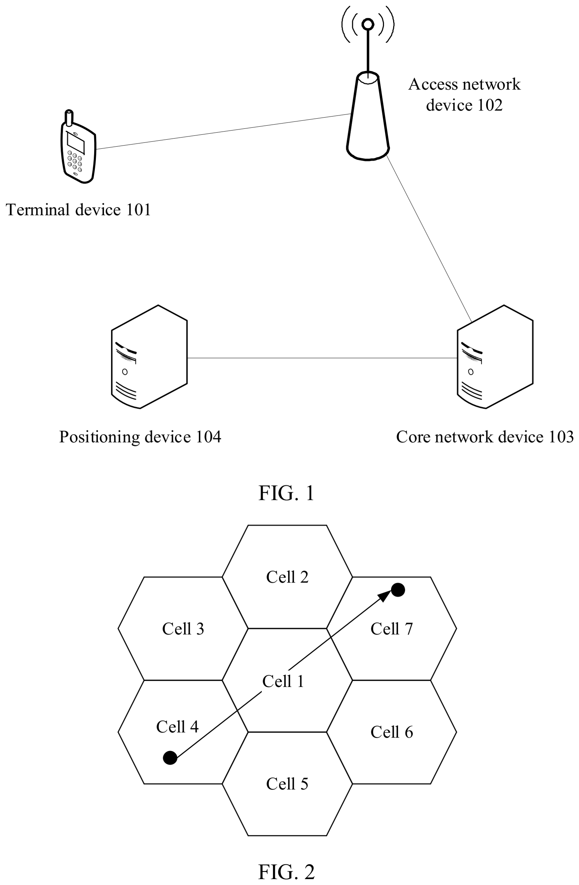

FIG. 1 is a diagram of a communication system according to an embodiment of this application. Refer to FIG. 1. A communication system includes a terminal device 101, an access network device 102, a positioning device 104, and a core network device 103.

Optionally, the terminal device 101 is connected to the access network device 102 through an interface, and the access network device 102 is connected to the core network device 103 through an interface. The core network device 103 is connected to the positioning device 104 through an interface. The positioning device 104 is configured to perform positioning calculation and management on a location of the terminal device 101.

For example, the terminal device 101 is connected to the access network device 102 through an NR-Uu interface. The access network device 102 is connected to the core network device 103 through an NG-C interface. The core network device 103 is connected to the positioning device 104 through an NL1 interface.

Optionally, the core network device 103 may be an access and mobility management function (access and mobility management function, AMF). The positioning device 104 may be a location management function (location management function, LMF).

FIG. 1 shows only an example in which the communication system includes the access network device 102. In actual application, the communication system may further include more access network devices. This is not specifically limited in this application.

The following describes a terminal device, an access network device, a core network device, and a positioning device in this application.

The terminal device is also referred to as user equipment (user equipment, UE), a mobile station (mobile station, MS), a mobile terminal (mobile terminal, MT), customer-premises equipment (customer-premises equipment, CPE), or the like. The terminal device is a device that includes a wireless communication function (providing a user with voice/data connectivity), for example, a handheld device having a wireless connection function, a vehicle-mounted device, or a machine type communication (machine type communication, MTC) terminal. Currently, the terminal device may include a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal (for example, an uncrewed aerial vehicle or a vehicle) in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in self driving may be an uncrewed aerial vehicle, a helicopter, or an airplane. For example, the wireless terminal in the internet of vehicles may be a vehicle-mounted device, a vehicle equipment, a vehicle-mounted module, a vehicle, or a ship; the wireless terminal in industrial control may be a camera, a robot, or a robot arm; and the wireless terminal in the smart home may be a television, an air conditioner, a sweeper, a speaker, or a set-top box.

It should be noted that the terminal device may alternatively be a chip, a module, or a control unit in the foregoing possible devices or apparatuses. This is not specifically limited in this application.

The access network device is an apparatus that is deployed in a radio access network and that provides the wireless communication function for the terminal device. The access network device may be a radio access network (radio access network, RAN) node that enables the terminal device to access a wireless network, and may also be referred to as an access network device, a RAN entity, an access node, a network node, a communication apparatus, or the like.

The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like, or may be a network device in a 5G mobile communication system, for example, a next generation NodeB (next generation NodeB, gNB), a TRP, or a transmission point (transmission point, TP) in an NR system, or one antenna panel or one group of antenna panels (including a plurality of antenna panels) of a base station in a 5G mobile communication system. Alternatively, the access network device may be a network node that forms a gNB or a transmission point, for example, a baseband unit (baseband unit, BBU) or a distributed unit (distributed unit, DU).

In some deployments, a gNB may include a central unit (central unit, CU) and a DU. The gNB may further include an active antenna unit (active antenna unit, AAU). The CU implements some functions of the gNB, and the DU implements some functions of the gNB.

For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is finally changed to information at the PHY layer, or is changed from information at the PHY layer. Therefore, in this architecture, higher layer signaling (for example, RRC layer signaling) may also be considered to be sent by the DU, or sent by the DU and the AAU.

It may be understood that the access network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The core network device is responsible for access control, registration management, service management, mobility management, and the like for the terminal device to access a network. For example, the core network device is an AMF.

The positioning device is configured to perform positioning calculation and management on a location of the terminal device. For example, the positioning device is an LMF.

In this application, a name of the AMF may change with evolution of a communication system. In a current communication system or a future communication system, a functional network element that has another name and that has a function similar to that of the AMF may be understood as the AMF in this application, and is applicable to the method provided in embodiments of this application.

In this application, the LMF is a name in the current communication system. In the future communication system, the name of the LMF may change with evolution of the communication system. Therefore, the LMF is referred to as a location management device hereinafter to describe the technical solutions in this application. The location management device is configured to perform positioning calculation on the location of the terminal device. In the current communication system or the future communication system, a functional network element that has another name and that has a function similar to that of the location management device may be understood as the location management device in this application, and is applicable to the method provided in this application.

In research on a positioning technology in R17, a serving base station configures a sounding reference signal (sounding reference signal, SRS) resource for a terminal device, and the SRS resource is valid only in a current cell in which the terminal device is located. When the terminal device moves to another cell, the serving base station releases the SRS resource. In research on the positioning technology in R18, a positioning area (positioning area, PA) of the sounding reference signal is one of research directions. The following first describes the positioning area. The positioning area includes areas covered by a plurality of cells. For example, the positioning area includes areas covered by a cell 1 to a cell 7. After the positioning area is introduced in R18, the SRS resource configured by the serving base station for the terminal device is valid in the positioning area. As shown in FIG. 2, a terminal device camps on a cell 4, and an SRS resource is configured for the terminal device in the cell 4. The SRS resource is valid in a cell 1 to a cell 7 shown in FIG. 2. Therefore, when the terminal device moves to the cell 7, the SRS resource is still valid.

A communication system to which this application is applicable includes a first network device and a first access network device. The first access network device is an access network device in a first positioning area. The first positioning area includes areas covered by a plurality of cells. When a positioning reference signal resource and the first positioning area are configured for the terminal device, if the terminal device reselects another cell in the first positioning area during transmission of a positioning reference signal, the terminal device may continue to transmit the positioning reference signal. In other words, a first positioning reference signal resource is valid in the first positioning area.

In a possible implementation, the first network device is a positioning device. For the positioning device, refer to the foregoing related descriptions.

In this implementation, optionally, the communication system further includes a second access network device. The second access network device is a serving access network device of the terminal device. In other words, the second access network device is an access network device in a cell in which the terminal device is currently located, or in other words, an access network device on which the terminal device currently camps. The second access network device may be referred to as a serving access network device or a receiving access network device. For example, the second access network device may be a serving base station (serving gNB) or a receiving base station (receiving gNB). Optionally, the communication system further includes a fourth access network device, and the fourth access network device is a last serving access network device of the terminal device. In other words, the fourth access network device is an access network device that releases the terminal device to an RRC inactive state, and the fourth access network device retains a UE context of the terminal device. For example, the fourth access network device may be referred to as a last serving access network device or an anchor access network device. For example, the fourth access network device may be a last serving base station (last serving gNB) or an anchor base station (anchor gNB).

In this implementation, optionally, the communication system further includes a third access network device, and the third access network device is an access network device that is selected by the positioning device and that is configured to measure a positioning reference signal sent by the terminal device. For example, the third access network device may be referred to as a measurement base station.

In another possible implementation, the first network device is a serving access network device of the terminal device, and is referred to as a second access network device herein. In other words, the second access network device is an access network device in a cell in which the terminal device is currently located, or in other words, an access network device on which the terminal device currently camps. The second access network device may be referred to as a serving access network device or a receiving access network device. For example, the second access network device may be a serving base station or a receiving base station.

In this implementation, optionally, the communication system further includes a fourth access network device. For the fourth access network device, refer to the foregoing related descriptions.

The technical solutions of this application are described below with reference to specific embodiments.

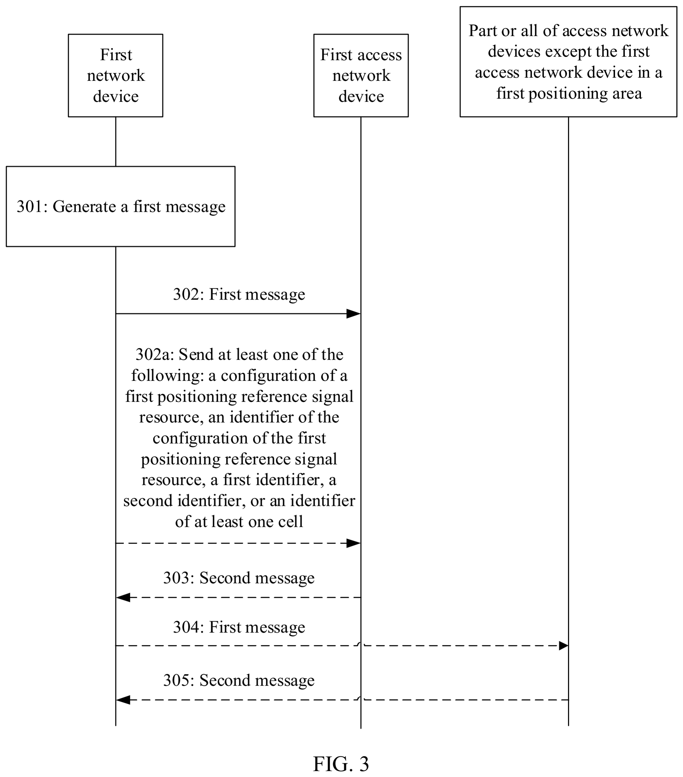

FIG. 3 is a diagram of a first embodiment of a communication method according to an embodiment of this application. Refer to FIG. 3. The method includes the following steps.

301: A first network device generates a first message.

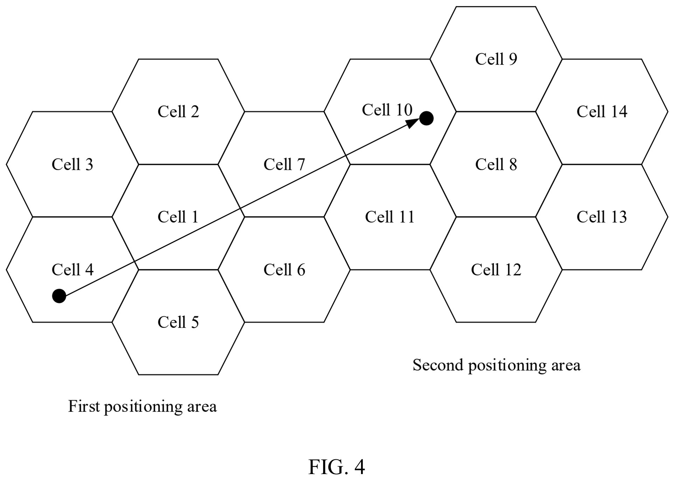

The first message indicates to release a first positioning reference signal resource. The first positioning reference signal resource is a to-be-released positioning reference signal resource in a first positioning area. The first positioning area is a positioning valid area or an SRS valid area, or briefly referred to as a valid area, a positioning area, or the like. For example, as shown in FIG. 4, the first positioning area includes areas covered by a cell 1 to a cell 7. The first positioning reference signal resource may be valid in the first positioning area. In this way, when a terminal device moves in the first positioning area, the first positioning reference signal resource is still valid. There is no need to frequently configure a positioning reference signal resource.

The following describes two possible implementations in which the first message indicates to release the first positioning reference signal resource. This application is also applicable to another implementation. This is not specifically limited in this application.

Implementation 1: A format of the first message indicates to release the first positioning reference signal resource.

In this implementation, the first message may be a newly defined new radio positioning protocol A (NR positioning protocol A, NRPPa) message. The first network device indicates, by using the format of the first message, to release the first positioning reference signal resource. For example, a function of the newly defined message is to release the first positioning reference signal resource.

Implementation 2: The first message includes first indication information, and the first indication information indicates to release the first positioning reference signal resource. The first message may be a newly defined NRPPa message, or may be an existing NRPPa message.

For example, if a value of the first indication information is "1", it indicates to release the first positioning reference signal resource. If a value of the first indication information is "0", it indicates to reserve the first positioning reference signal resource. Alternatively, if a value of the first indication information is "0", it indicates to release the first positioning reference signal resource. If a value of the first indication information is "1", it indicates to reserve the first positioning reference signal resource.

For example, if a value of the first indication information is "true (True)", it indicates to release the first positioning reference signal resource. If a value of the first indication information is "false (False)", it indicates to reserve the first positioning reference signal resource. Alternatively, if a value of the first indication information is "false (False)", it indicates to release the first positioning reference signal resource. If a value of the first indication information is "true (True)", it indicates to reserve the first positioning reference signal resource.

For example, if a value of the first indication information is "reserve (reserve)", it indicates to reserve the first positioning reference signal resource. If a value of the first indication information is "release (release)", it indicates to release the first positioning reference signal resource.

For example, if a value of the first indication information is absent, it indicates to reserve the first positioning reference signal resource. If a value of the first indication information is "release (release)", it indicates to release the first positioning reference signal resource.

For example, if a value of the first indication information is absent, it indicates to release the first positioning reference signal resource. If a value of the first indication information is "reserve (reserve)", it indicates to reserve the first positioning reference signal resource.

Optionally, the first positioning reference signal resource is a periodic positioning reference signal resource, an aperiodic positioning reference signal resource, or a semi-static positioning reference signal resource. This is not specifically limited in this application.

Optionally, the first positioning reference signal resource is an SRS resource.

Optionally, the first message is a newly defined NRPPa message, and a message name may be a positioning reference signal resource release message, a positioning reference signal configuration release request, an SRS resource release (SRS resource release) message, an SRS configuration release request (SRS configuration release request) message, a resource coordination (resource coordination) message, a positioning area (positioning area, PA) coordination message, or the like. In this application, a name of the first message is not limited.

Optionally, the first message is an existing NRPPa message, for example, a TRP information request (TRP information request) message, a positioning reference signal configuration request (positioning reference signal configuration request, PA configuration request) message, or a measurement request (measurement request) message.

302: The first network device sends the first message to a first access network device. Correspondingly, the first access network device receives the first message from the first network device.

The first access network device is an access network device in the first positioning area.

The following describes some possible cases in which the first network device releases the first positioning reference signal resource.

Case 1: A second access network device determines a configuration of a second positioning reference signal resource and/or information about a second positioning area for the terminal device. The first positioning reference signal resource is a resource that is no longer used or occupied by the terminal device after update, or in other words, a configuration of the first positioning reference signal resource and/or information about the first positioning area are/is used by the terminal device before update.

In a possible implementation, in the case 1, the terminal device moves from the first positioning area to the second positioning area, and as a result, the first positioning reference signal resource configured for the terminal device is invalid. The second access network device is an access network device in a current cell in which the terminal device is located. For example, as shown in FIG. 4, the first positioning area includes a cell 1 to a cell 7. The second positioning area includes a cell 8 to a cell 14. The terminal device moves from the cell 4 to the cell 10. Therefore, a serving base station of the cell 10 may configure the configuration of the second positioning reference signal resource and the information about the second positioning area for the terminal device.

In another possible implementation, in the case 1, the terminal device is still in the first positioning area, and the first positioning reference signal resource is invalid. For example, when a timing advance (timing advance, TA) timer expires, the first positioning reference signal resource is invalid. The second access network device re-applies for or updates a positioning reference signal resource for the terminal device. In this scenario, a positioning area may remain unchanged.

In still another possible implementation, in the case 1, the terminal device moves, and specifically moves from the first positioning area to the second positioning area. The terminal device may use the same first positioning reference signal resource in the two positioning areas. Therefore, the second access network device may update only the positioning area, and does not change a configuration of the positioning reference signal resource. In other words, the configuration of the second positioning reference signal resource is the same as the configuration of the first positioning reference signal resource. The first positioning area is different from the second positioning area.

It should be noted that in the foregoing three implementations, if the first positioning area and the second positioning area have no overlapping area, the first network device may send the first message to all access network devices in the first positioning area, so that all the access network devices in the first positioning area release the first positioning reference signal resource. If the first positioning area and the second positioning area have an overlapping area, the first network device may send the first message to an access network device in an area other than the overlapping area in the first positioning area. Therefore, the access network device in the area other than the overlapping area in the first positioning area releases the first positioning reference signal resource.

In this application, releasing a resource is releasing reservation of a resource, and may also be understood as canceling reservation of a resource or canceling occupation of a resource. When a resource of a base station is reserved/occupied, the base station cannot schedule the resource. After the reserved resource is released, the base station may allocate the resource to a terminal device within coverage for use.

Case 2: The terminal device cannot send a positioning reference signal on the first positioning reference signal resource due to deterioration of a channel condition. Alternatively, a third access network device cannot receive a positioning reference signal sent by the terminal device on the first positioning reference signal resource due to deterioration of a channel condition. Alternatively, when the terminal device is scheduled, or the like, the first access network device determines to stop allocating the first positioning reference signal resource to the terminal device. The third access network device is an access network device that is selected by a positioning device and that is configured to perform positioning measurement on the positioning reference signal sent by the terminal device.

In the case 2, the first network device may release the first positioning reference signal resource. The first network device may send the first message to all access network devices in the first positioning area. Therefore, all the access network devices in the first positioning area release the first positioning reference signal resource.

Optionally, the first network device is a positioning device or a second access network device. The second access network device is a serving access network device of the terminal device, that is, an access network device in a cell in which the terminal device is currently located.

Optionally, the first network device is a positioning device, and before step 302, the positioning device receives a third message.

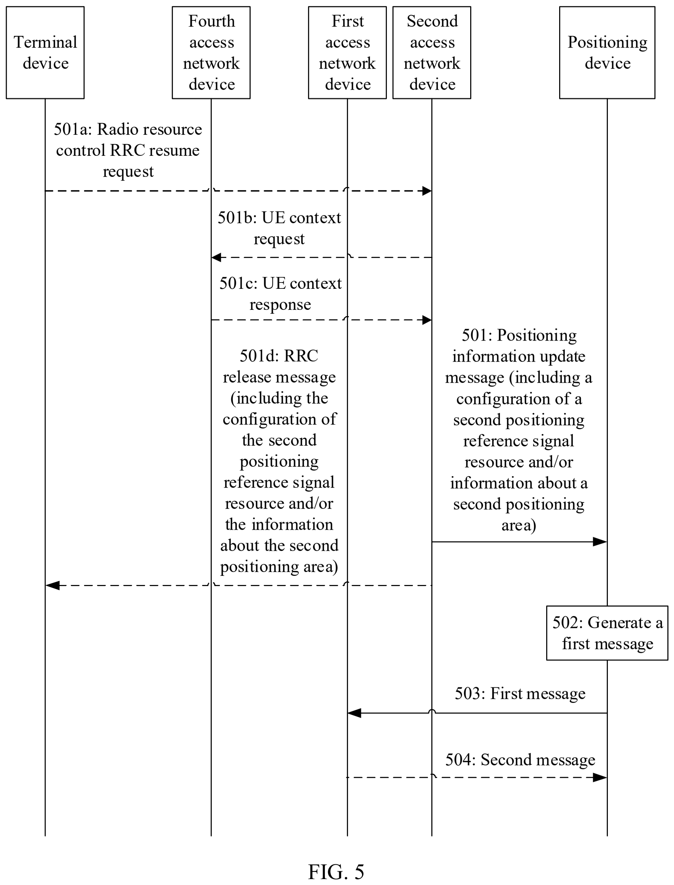

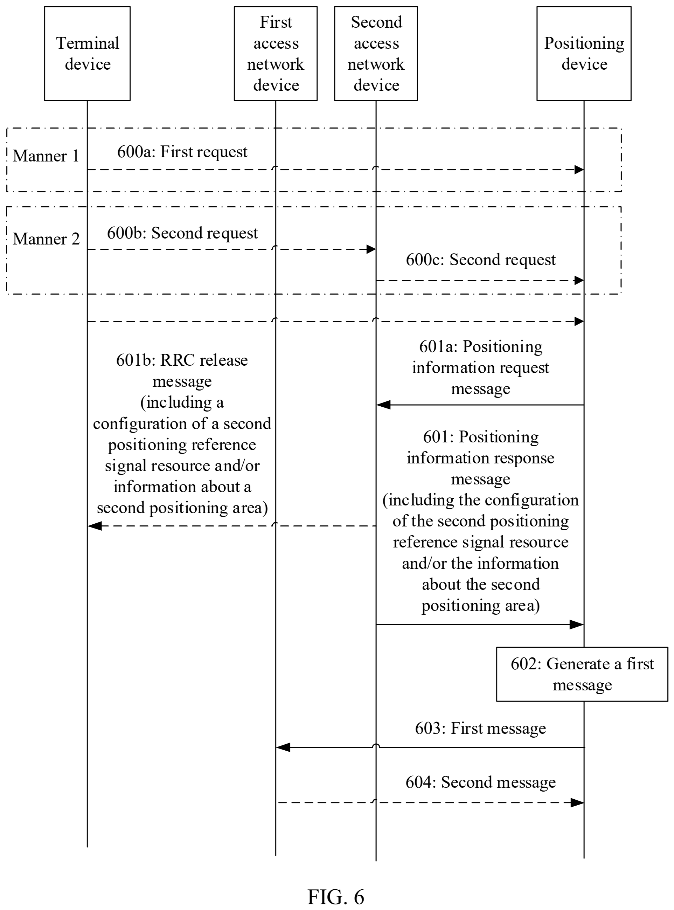

In a possible implementation, the third message includes the configuration of the second positioning reference signal resource and/or the information about the second positioning area. In this implementation, the third message may be a positioning information update message or a positioning information response message. Specifically, a name of the third message is not limited in this application. For this implementation, refer to the following related descriptions in the embodiments shown in FIG. 5 and FIG. 6.

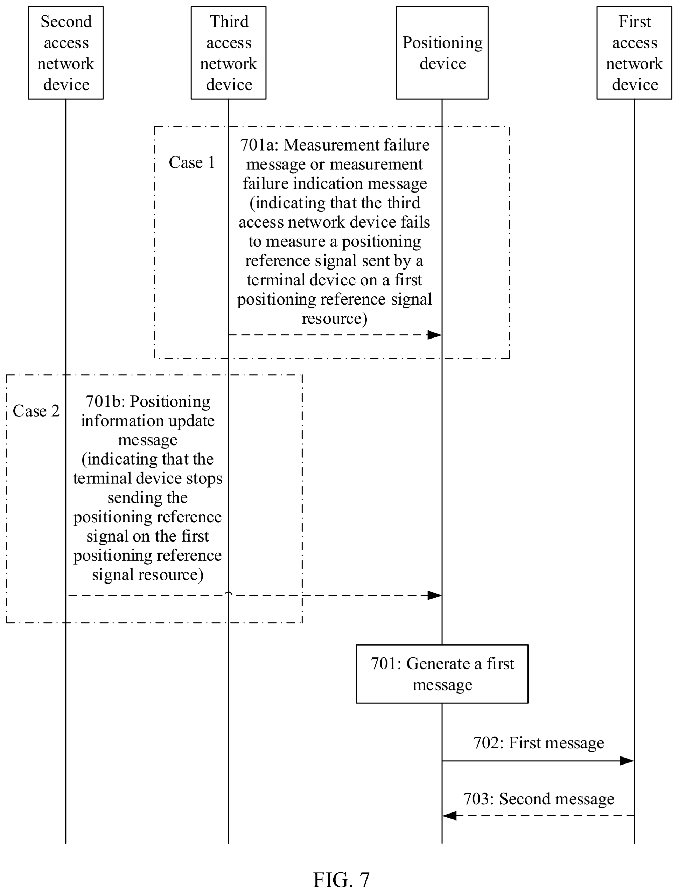

In another possible implementation, the third message indicates that the third access network device fails to measure the positioning reference signal sent by the terminal device on the first positioning reference signal resource. In this implementation, the third message may be a measurement failure message or a measurement failure indication message. Specifically, a name of the third message is not limited in this application. For this implementation, refer to the following related descriptions in the embodiment shown in FIG. 7.

In still another possible implementation, the third message includes second indication information, and the second indication information indicates that the terminal device stops sending the positioning reference signal on the first positioning reference signal resource. In this implementation, the third message may be a positioning information update message. Specifically, a name of the third message is not limited in this application. For this implementation, refer to the following related descriptions in the embodiment shown in FIG. 7.

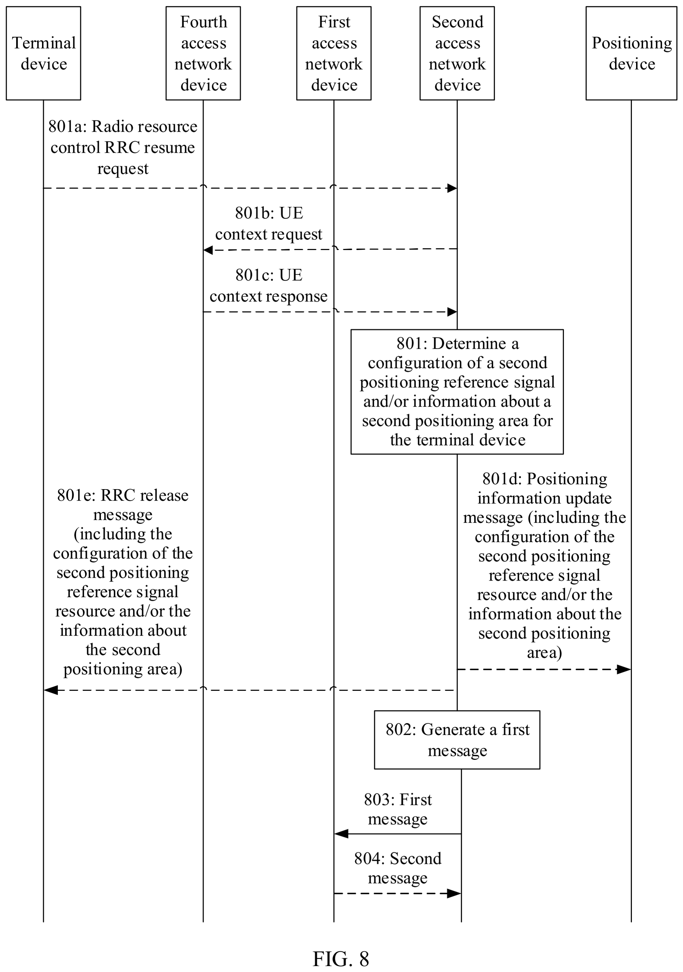

Optionally, the first network device is a second access network device. Before step 302, the second access network device determines the configuration of the second positioning reference signal resource and/or the information about the second positioning area for the terminal device. For this implementation, refer to related descriptions in the embodiment shown in FIG. 8.

Optionally, the first message is a non-UE association message. The non-UE association message is a message that is not associated with specific UE, and a transmission process of the message does not relate to identification information of the UE. Alternatively, information transferred by the non-UE association message is not for specific UE, or the non-UE association message is applicable to a base station or a TRP.

Optionally, the embodiment shown in FIG. 3 further includes step 302a. Step 302a may be performed after step 301.

302a: The first network device sends at least one of the following to the first access network device: the configuration of the first positioning reference signal resource, an identifier of the configuration of the first positioning reference signal resource, a first identifier, a second identifier, an identifier of the first positioning area, or an identifier of at least one cell.

The configuration of the first positioning reference signal resource includes an identifier of the first positioning reference signal resource and/or an identifier of a resource set in which the first positioning reference signal resource is located. For example, an SRS resource set identifier (SRS Resource Set ID) and/or an SRS resource identifier (SRS Resource ID) may also include more specific configuration information, such as information about a time domain resource occupied by an SRS resource or information about a frequency domain resource occupied by an SRS resource.

The identifier of the configuration of the first positioning reference signal resource may be an SRS configuration identifier (SRS Configuration ID).

In a possible scenario, a network side configures a plurality of SRS resources for the terminal device, and each resource is associated with one ID. The SRS configuration identifier corresponds to an SRS resource. In other words, the first positioning reference signal resource is an SRS resource corresponding to the SRS configuration identifier.

The first identifier is an identifier used by the first network device to identify the first positioning reference signal resource. The second identifier is an identifier used by the first access network device to identify the first positioning reference signal resource. For example, if the first network device is a positioning device, the first identifier may be represented as an LMF SRS ID, and the second identifier is represented as a RAN SRS ID. For example, if the first network device is a second access network device, the first identifier may be represented as a gNB1 ID, and the second identifier may be represented as a gNB2 ID.

The at least one cell belongs to the first positioning area, and the at least one cell is a cell managed by the first access network device. For example, as shown in FIG. 4, the first positioning area includes the cell 1 to the cell 7. The first access network device manages the cell 1 to the cell 3. Therefore, the identifier of the at least one cell includes identifiers respectively corresponding to the cell 1 to the cell 3. Therefore, the first access network device may release the first positioning reference signal resource in the cell 1 to the cell 3. Optionally, the identifier of the at least one cell may be represented by using a cell list.

It should be noted that optionally, the identifier of the at least one cell may be replaced with an identifier of at least one TRP. After the first access network device receives the first message, the first access network device may indicate the at least one TRP to release the first positioning reference signal resource. Optionally, the identifier of the at least one TRP may be represented by using a TRP list.

The identifier of the first positioning area is an identifier allocated by the network side to the first positioning area.

Optionally, a part or all of the information sent by the first network device in step 302a may be carried in the first message in step 302. This is not specifically limited in this application.

It should be noted that there is no fixed execution sequence between step 302 and step 302a. Step 302 may be performed first, and then step 302a is performed. Alternatively, step 302a is performed first, and then step 302 is performed. Alternatively, step 302 and step 302a are simultaneously performed based on a case. This is not specifically limited in this application.

Optionally, the embodiment shown in FIG. 3 further includes step 303. Step 303 may be performed after step 302.

303: The first access network device sends a second message to the first network device. Correspondingly, the first network device receives the second message from the first access network device.

The second message indicates that the first positioning reference signal resource is successfully released or fails to be released. The second message is a response message for the first message.

Optionally, the second message is a positioning reference signal resource release response message, a positioning reference signal resource configuration release response message, an SRS resource release response (SRS resource release response) message, or an SRS configuration release response (SRS Configuration release response) message. In this application, a name of the second message is not limited.

Optionally, the second message is an existing NRPPa message. For example, the second message may be a TRP information response message (TRP information response), a measurement response (measurement response) message, a positioning reference signal configuration response (positioning reference signal configuration response, PRS configuration response) message, or the like.

Optionally, the second message is acknowledgment information (acknowledgment, ACK) or non-acknowledgement information (non-acknowledgment, NACK). The ACK indicates that the first positioning reference signal resource is successfully released. The NACK indicates that the first positioning reference signal resource fails to be released.

Optionally, the embodiment shown in FIG. 3 further includes step 304. Step 304 may be performed after step 301.

304: The first network device sends the first message to a part or all of access network devices except the first access network device in the first positioning area. Correspondingly, the part or all of the access network devices except the first access network device in the first positioning area receive the first message from the first network device.

It can be learned from the foregoing related descriptions that the first network device may send the first message to the part or all of the access network devices except the first access network device in the first positioning area. Therefore, the part or all of the access network devices except the first access network device in the first positioning area release the first positioning reference signal resource, to avoid a waste of resources caused because the first positioning reference signal resource is always occupied. In addition, a problem that a same positioning reference signal resource in the first positioning area is allocated to different terminal devices is avoided. Therefore, positioning measurement interference between terminal devices is avoided.

For the first message, refer to the related descriptions of step 301. Details are not described herein again.

Optionally, the embodiment shown in FIG. 3 further includes step 305. Step 305 may be performed after step 304.

305: The part or all of the access network devices except the first access network device in the first positioning area send the second message to the first network device. Correspondingly, the first network device receives the second message from the part or all of the access network devices except the first access network device in the first positioning area.

For the second message, refer to the related descriptions of step 303. Details are not described herein again.

In this embodiment of this application, the first network device sends the first message to the first access network device. The first message indicates to release the first positioning reference signal resource. In this way, the first access network device releases the first positioning reference signal resource. The first positioning reference signal resource is the to-be-released positioning reference signal resource in the first positioning area. Therefore, impact on the cell capacity in the first positioning area is avoided, and resource utilization is improved. In addition, the problem that the same positioning reference signal resource in the first positioning area is allocated to different terminal devices is avoided. Therefore, positioning measurement interference between different terminal devices is avoided, and positioning accuracy is improved.

FIG. 5 is a diagram of a second embodiment of a communication method according to an embodiment of this application. Refer to FIG. 5. The method includes the following steps.

501: A second access network device sends a positioning information update (positioning information update) message to a positioning device. The positioning information update message includes a configuration of a second positioning reference signal resource and/or information about a second positioning area. Correspondingly, the positioning device receives the positioning information update message from the second access network device.

Before step 501, the second access network device determines the configuration of the second positioning reference signal resource and/or the information about the second positioning area for a terminal device. A configuration of a first positioning reference signal resource and information about a first positioning area are used by the terminal device before update. Alternatively, a first positioning reference signal resource is a resource used or occupied by the terminal device before update. For some possible scenarios in which the second access network device determines the configuration of the second positioning reference signal resource and/or the information about the second positioning area for the terminal device, refer to the related descriptions in the embodiment shown in FIG. 3. Details are not described herein again.

Optionally, the embodiment shown in FIG. 5 further includes step 501a to step 501c. Step 501a to step 501c may be performed before step 501.

501a: The terminal device sends an RRC resume request to the second access network device. Correspondingly, the second access network device receives the RRC resume request from the terminal device.

The RRC resume request includes third indication information, and the third indication information is used to request a positioning reference signal resource.

501b: The second access network device sends a UE context request to a fourth access network device. Correspondingly, the fourth access network device receives the UE context request from the second access network device.

The UE context request is used to request a UE context of the terminal device. The fourth access network device is an anchor access network device of the terminal device, and the fourth access network device retains the UE context of the terminal device.

501c: The fourth access network device sends a UE context response to the second access network device. Correspondingly, the second access network device receives the UE context response from the fourth access network device.

The UE context response includes the UE context of the terminal device. The UE context includes positioning information of the terminal device. For example, the positioning information includes request SRS transmission characteristics (request SRS transmission characteristics) information. The request SRS transmission characteristics information is from the positioning device.

Optionally, the request SRS transmission characteristics information includes at least one of the following: a sending periodicity of a positioning reference signal, a bandwidth occupied by the positioning reference signal, a quantity of times of sending the positioning reference signal, path loss configuration information, spatial relationship information, frequency information, or the like.

Before step 501, optionally, the second access network device determines the configuration of the second positioning reference signal resource and/or the information about the second positioning area based on the request SRS transmission characteristics information. For example, in the configuration of the second positioning reference signal resource, a sending periodicity of the positioning reference signal may be the sending periodicity of the positioning reference signal in the request SRS transmission characteristics information.

Optionally, the embodiment shown in FIG. 5 further includes step 501d. Step 501d may be performed after step 501c.

501d: The second access network device sends an RRC release message to the terminal device. The RRC release message includes the configuration of the second positioning reference signal resource and/or the information about the second positioning area. Correspondingly, the terminal device receives the RRC release message from the second access network device.

The RRC release message is further used to release the terminal device to an RRC inactive state.

It should be noted that there is no fixed execution sequence between step 501 and step 501d. Step 501 may be performed first, and then step 501d is performed. Alternatively, step 501d is performed first, and then step 501 is performed. Alternatively, step 501 and step 501d are simultaneously performed based on a case. This is not specifically limited in this application.

Step 502 to step 504 in the embodiment shown in FIG. 5 are similar to step 302 and step 303 in the embodiment shown in FIG. 3. For details, refer to the related descriptions of step 302 and step 303 in the embodiment shown in FIG. 3. Details are not described herein again.

It should be understood that step 501 in this embodiment may alternatively be an optional step. This is not specifically limited in this embodiment.

In the embodiment shown in FIG. 5, the positioning device receives the positioning information update message from the second access network device. The positioning information update message includes the configuration of the second positioning reference signal resource and/or the information about the second positioning area. The configuration of the first positioning reference signal resource and the information about the first positioning area are used by the terminal device before the update. Alternatively, the first positioning reference signal resource is the resource used or occupied by the terminal device before the update. Therefore, the positioning device determines that the positioning reference signal resource of the terminal device is updated. The positioning device may indicate, by using the first message, a first access network device to release the first positioning reference signal resource. Therefore, the first positioning reference signal resource is not always occupied, and impact on a cell capacity is avoided, to improve resource utilization.

FIG. 6 is a diagram of a third embodiment of a communication method according to an embodiment of this application. Refer to FIG. 6. The method includes the following steps.

601a: A positioning device sends a positioning information request (positioning information request) message to a second access network device. Correspondingly, the second access network device receives the positioning information request message from the positioning device.

The positioning information request message is used to request the second access network device to configure a positioning reference signal resource for a terminal device.

601: The second access network device sends a positioning information response message to the positioning device. The positioning information response message includes a configuration of a second positioning reference signal resource and/or information about a second positioning area. Correspondingly, the positioning device receives the positioning information response message from the second access network device.

After step 601a, the second access network device determines the configuration of the second positioning reference signal resource and/or the information about the second positioning area for the terminal device. A configuration of a first positioning reference signal resource and information about a first positioning area are used by the terminal device before update. Alternatively, a first positioning reference signal resource is a resource used or occupied by the terminal device before update. For some possible scenarios in which the second access network device determines the configuration of the second positioning reference signal resource and/or the information about the second positioning area for the terminal device, refer to the related descriptions in the embodiment shown in FIG. 3. Details are not described herein again.

It should be understood that step 601a and step 601 in this embodiment may alternatively be optional steps. This is not specifically limited in this embodiment.

Optionally, the embodiment shown in FIG. 6 further includes step 601b. There is no fixed execution sequence between step 601b and step 601. Step 601b may be performed first, and then step 601 is performed. Alternatively, step 601 is performed first, and then step 601b is performed. Alternatively, step 601b and step 601 are simultaneously performed based on a case. This is not specifically limited in this application.

601b: The second access network device sends an RRC release message to the terminal device. The RRC release message includes the configuration of the second positioning reference signal resource and/or the information about the second positioning area. Correspondingly, the terminal device receives the RRC release message from the second access network device.

Specifically, after the second access network device receives the positioning information request message, the second access network device may determine the configuration of the second positioning reference signal resource and/or the information about the second positioning area for the terminal device. Then, the second access network device sends the configuration of the second positioning reference signal resource and/or the information about the second positioning area to the terminal device by using the RRC release message. The RRC release message is further used to release the terminal device to an RRC inactive state.

Before step 601a, the terminal device may request to configure or update the positioning reference signal resource. The following describes two request manners of the terminal device.

Manner 1 is described below with reference to step 600a. Optionally, the embodiment shown in FIG. 6 further includes step 600a. Step 600a may be performed before step 601a.

600a: The terminal device sends a first request to the positioning device. Correspondingly, the positioning device receives the first request from the terminal device.

The first request is used to request to configure or update the positioning reference signal resource. Optionally, the first request is carried in an event report (Event report).

Manner 2 is described below with reference to step 600b and step 600c. Optionally, the embodiment shown in FIG. 6 further includes step 600b and step 600c. Step 600b and step 600c may be performed before step 601a.

600b: The terminal device sends a second request to the second access network device. Correspondingly, the second access network device receives the second request from the terminal device.

The second request is used to request to configure or update the positioning reference signal resource.

600c: The second access network device sends the second request to the positioning device. Correspondingly, the positioning device receives the second request from the second access network device.

The terminal device requests, by using step 600b and step 600c, the positioning device to configure or update the positioning reference signal resource for the terminal device.

Step 602 to step 604 in the embodiment shown in FIG. 6 are similar to step 302 and step 303 in the embodiment shown in FIG. 3. For details, refer to the related descriptions of step 302 and step 303 in the embodiment shown in FIG. 3. Details are not described herein again.

In the embodiment shown in FIG. 6, the positioning device receives the positioning information response message from the second access network device. The positioning information response message includes the configuration of the second positioning reference signal resource and/or the information about the second positioning area. The configuration of the first positioning reference signal resource and the information about the first positioning area are used by the terminal device before the update. Alternatively, the first positioning reference signal resource is the resource used or occupied by the terminal device before the update. Therefore, the positioning device determines that the positioning reference signal resource of the terminal device is updated. The positioning device may indicate, by using the first message, a first access network device to release the first positioning reference signal resource. Therefore, the first positioning reference signal resource is not always occupied, and impact on a cell capacity is avoided, to improve resource utilization.

FIG. 7 is a diagram of a fourth embodiment of a communication method according to an embodiment of this application. Refer to FIG. 7. The method includes the following steps.

701: A positioning device generates a first message.

Step 701 is similar to step 301 in the embodiment shown in FIG. 3. For details, refer to the related descriptions of step 301 in the embodiment shown in FIG. 3. Details are not described herein again.

The following describes two possible cases in this application in which the positioning device indicates a first access network device to release a first positioning reference signal resource.

Case 1 is described below with reference to step 701a. Optionally, the embodiment shown in FIG. 7 further includes step 701a. Step 701a may be performed before step 701.

701a: A third access network device sends a measurement failure (measurement failure) message or a measurement failure indication (measurement failure indication) message to the positioning device. The measurement failure message or the measurement failure indication message indicates that the third access network device fails to measure a positioning reference signal sent by a terminal device on the first positioning reference signal resource. Correspondingly, the positioning device receives the measurement failure message or the measurement failure indication message from the third access network device.

The third access network device is an access network device that is selected by the positioning device and that is configured to measure the positioning reference signal sent by the terminal device.

In a possible implementation, because a channel condition deteriorates, the third access network device cannot receive the positioning reference signal sent by the terminal device on the first positioning reference signal resource. Consequently, the third access network device fails to measure the positioning reference signal. Therefore, the third access network device may perform step 701a.

In another possible implementation, the terminal device moves, and as a result, the terminal device stops sending the positioning reference signal on the first positioning reference signal resource. Consequently, the third access network device fails to measure the positioning reference signal. Therefore, the third access network device may perform step 701a.

Case 2 is described below with reference to step 701b. Optionally, the embodiment shown in FIG. 7 further includes step 701b. Step 701b may be performed before step 701.

701b: A second access network device sends a positioning information update message to the positioning device. The positioning information update message includes second indication information, and the second indication information indicates that the terminal device stops sending the positioning reference signal on the first positioning reference signal resource. Correspondingly, the positioning device receives the positioning information update message from the second access network device.

In other words, the second indication information indicates that the first positioning reference signal resource is no longer used.

In a possible implementation, because a channel condition deteriorates, the second access network device cannot receive the positioning reference signal sent by the terminal device on the first positioning reference signal resource. The second access network device may perform step 701b.

In another possible implementation, the terminal device moves, and as a result, the terminal device stops sending the positioning reference signal on the first positioning reference signal resource. Therefore, the second access network device may perform step 701b.

In still another possible implementation, due to scheduling of a base station, the first positioning reference signal resource cannot be allocated to the terminal device for use. Therefore, the second access network device may perform step 701b.

Step 702 and step 703 in the embodiment shown in FIG. 7 are similar to step 302 and step 303 in the embodiment shown in FIG. 3. For details, refer to the related descriptions of step 302 and step 303 in the embodiment shown in FIG. 3. Details are not described herein again.

In the embodiment shown in FIG. 7, the positioning device receives the measurement failure message or the measurement failure indication message from the third access network device. The measurement failure message or the measurement failure indication message indicates that the third access network device fails to measure the positioning reference signal sent by the terminal device on the first positioning reference signal resource. Alternatively, the positioning device receives the positioning information update message from the second access network device. The positioning information update message includes the second indication information, and the second indication information indicates that the terminal device stops sending the positioning reference signal on the first positioning reference signal resource. Therefore, the positioning device may determine to release the first positioning reference signal resource. The positioning device may indicate, by using the first message, the first access network device to release the first positioning reference signal resource. Therefore, the first positioning reference signal resource is not always occupied, and impact on a cell capacity is avoided, to improve resource utilization.

FIG. 8 is a diagram of a fifth embodiment of a communication method according to an embodiment of this application. Refer to FIG. 8. The method includes the following steps.

801: A second access network device determines a configuration of a second positioning reference signal resource and/or information about a second positioning area for a terminal device.

A configuration of a first positioning reference signal resource and information about a first positioning area are used by the terminal device before update. Alternatively, a first positioning reference signal resource is a resource used or occupied by the terminal device before update. For some possible scenarios in which the second access network device determines the configuration of the second positioning reference signal resource and/or the information about the second positioning area for the terminal device, refer to the related descriptions in the embodiment shown in FIG. 3. Details are not described herein again.

It should be understood that step 801 in this embodiment may alternatively be an optional step. This is not specifically limited in this embodiment.

Optionally, the embodiment shown in FIG. 8 further includes step 801a to step 801c. Step 801a to step 801c may be performed before step 801.

801a: The terminal device sends an RRC resume request to the second access network device. Correspondingly, the second access network device receives the RRC resume request from the terminal device.

801b: The second access network device sends a UE context request to a fourth access network device. Correspondingly, the fourth access network device receives the UE context request from the second access network device.

801c: The fourth access network device sends a UE context response to the second access network device. Correspondingly, the second access network device receives the UE context response from the fourth access network device.

Step 801a to step 801c are similar to step 501a to step 501c in the embodiment shown in FIG. 5. For details, refer to the related descriptions of step 501a to step 501c in the embodiment shown in FIG. 5.

Optionally, the embodiment shown in FIG. 8 further includes step 801d and step 801e. Step 801d and step 801e are performed after step 801.

801d: The second access network device sends a positioning information update message to the positioning device. The positioning information update message includes the configuration of the second positioning reference signal resource and/or the information about the second positioning area. Correspondingly, the positioning device receives the positioning information update message from the second access network device.

801e: The second access network device sends an RRC release message to the terminal device. The RRC release message includes the configuration of the second positioning reference signal resource and/or the information about the second positioning area. Correspondingly, the terminal device receives the RRC release message from the terminal device.

There is no fixed execution sequence between step 801d and step 801e. Step 801d may be performed first, and then step 801e is performed. Alternatively, step 801e is performed first, and then step 801d is performed. Alternatively, step 801d and step 801e are simultaneously performed based on a case. This is not specifically limited in this application.

Step 802 to step 804 in the embodiment shown in FIG. 8 are similar to step 302 and step 303 in the embodiment shown in FIG. 3. For details, refer to the related descriptions of step 302 and step 303 in the embodiment shown in FIG. 3. Details are not described herein again.

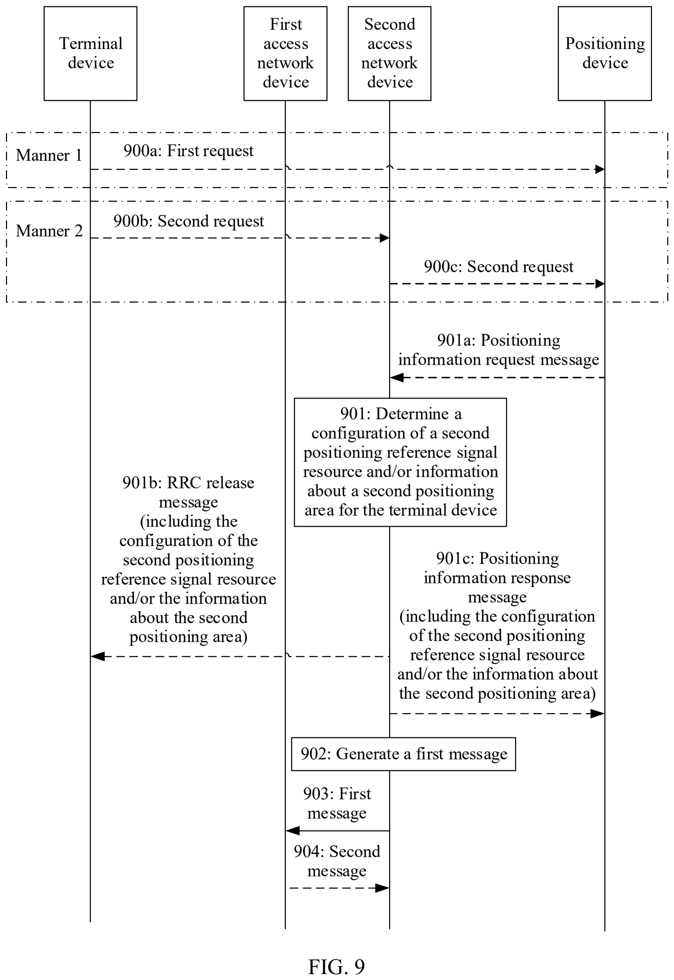

FIG. 9 is a diagram of sixth embodiment of a communication method according to an embodiment of this application. Refer to FIG. 9. The method includes the following steps.

901: A second access network device determines a configuration of a second positioning reference signal resource and/or information about a second positioning area for a terminal device.

Step 901 is similar to step 801 in the embodiment shown in FIG. 8. For details, refer to the related descriptions of step 801 in the embodiment shown in FIG. 8. Details are not described herein again.

It should be understood that step 901 in this embodiment may alternatively be an optional step. This is not specifically limited in this embodiment.

Optionally, the embodiment shown in FIG. 9 further includes step 901a. Step 901a may be performed before step 901.

901a: A positioning device sends a positioning information request message to the second access network device. Correspondingly, the second access network device receives the positioning information request message from the positioning device.

Step 901a is similar to step 601a in the embodiment shown in FIG. 6. For details, refer to the related description of step 601a in the embodiment shown in FIG. 6.

Optionally, the embodiment shown in FIG. 9 further includes step 901b. Step 901b may be performed after step 901.

901b: The second access network device sends an RRC release message to the terminal device. The RRC release message includes the configuration of the second positioning reference signal resource and/or the information about the second positioning area. Correspondingly, the terminal device receives the RRC release message from the second access network device.

Step 901b is similar to step 601b in the embodiment shown in FIG. 6. For details, refer to the related descriptions of step 601b in the embodiment shown in FIG. 6. Details are not described herein again.

Optionally, the embodiment shown in FIG. 9 further includes step 901c. Step 901c may be performed after step 901.

901c: The second access network device sends a positioning information response message to the positioning device. The positioning information response message includes the configuration of the second positioning reference signal resource and/or the information about the second positioning area. Correspondingly, the positioning device receives the positioning information response message from the second access network device.

Step 901c is similar to step 601 in the embodiment shown in FIG. 6. For details, refer to the related descriptions of step 601 in the embodiment shown in FIG. 6.

It should be noted that there is no fixed execution sequence between step 901b and step 901c. Step 901b may be performed first, and then step 901c is performed. Alternatively, step 901c is performed first, and then step 901b is performed. Alternatively, step 901b and step 901c are simultaneously performed based on a case. This is not specifically limited in this application.

Before step 901a, the terminal device may request to configure or update a positioning reference signal resource. The following describes two request manners of the terminal device.

Manner 1 is described below with reference to step 900a. Optionally, the embodiment shown in FIG. 9 further includes step 900a. Step 900a may be performed before step 901a.

900a: The terminal device sends a first request to the positioning device. Correspondingly, the positioning device receives the first request from the terminal device. Step 900a is similar to step 600a in the embodiment shown in FIG. 6. For details, refer to the related description of step 600a in the embodiment shown in FIG. 6.

Manner 2 is described below with reference to step 900b and step 900c. Optionally, the embodiment shown in FIG. 9 further includes step 900b and step 900c. Step 900b and step 900c may be performed before step 901a.

900b: The terminal device sends a second request to the second access network device. Correspondingly, the second access network device receives the second request from the terminal device.

900c: The second access network device sends the second request to the positioning device. Correspondingly, the positioning device receives the second request from the second access network device.

Step 900b and step 900c are similar to step 600b and step 600c in the embodiment shown in FIG. 6. For details, refer to the related descriptions of step 600b and step 600c in the embodiment shown in FIG. 6. Details are not described herein again.

Step 902 to step 904 in the embodiment shown in FIG. 9 are similar to step 302 and step 303 in the embodiment shown in FIG. 3. For details, refer to the related descriptions of step 302 and step 303 in the embodiment shown in FIG. 3. Details are not described herein again.

In the embodiments shown in FIG. 8 and FIG. 9, the second access network device determines the configuration of the second positioning reference signal resource and/or the information about the second positioning area for the terminal device. A configuration of a first positioning reference signal resource and information about a first positioning area are used by the terminal device before update. Alternatively, a first positioning reference signal resource is a resource used or occupied by the terminal device before update. Therefore, the second access network device determines that the positioning reference signal resource of the terminal device is updated. The second access network device may indicate, by using a first message, a first access network device to release the first positioning reference signal resource. Therefore, the first positioning reference signal resource is not always occupied, and impact on a cell capacity is avoided, to improve resource utilization.

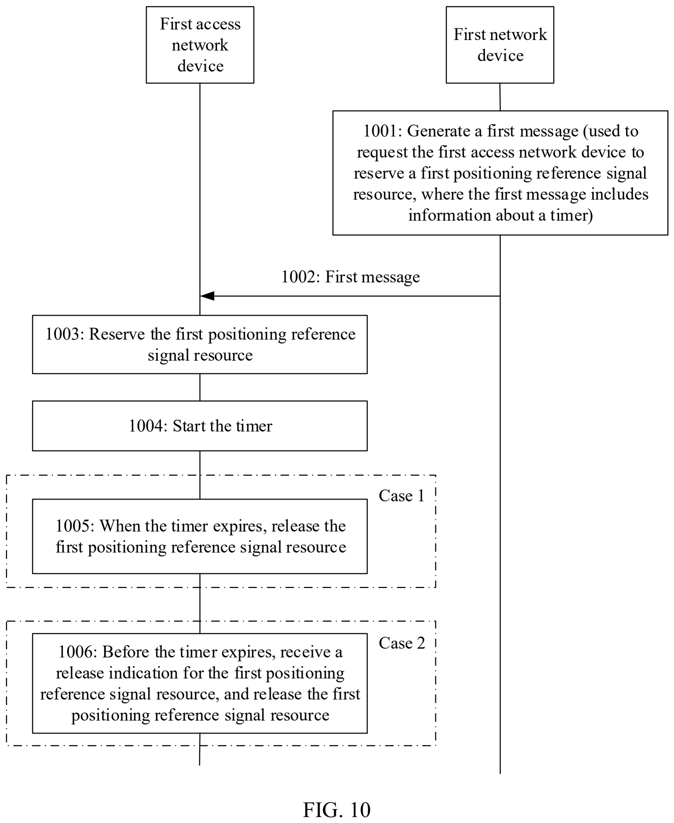

FIG. 10 is a diagram of a seventh embodiment of a communication method according to an embodiment of this application. Refer to FIG. 10. The method includes the following steps.

1001: A first network device generates a first message. The first message is used to request a first access network device to reserve a first positioning reference signal resource. The first message includes information about a timer.

The timer indicates reservation duration of the first positioning reference signal resource. The first positioning reference signal resource is a to-be-reserved positioning reference signal resource in a first positioning area. For example, as shown in FIG. 4, the first positioning area includes areas covered by a cell 1 to a cell 7. The first positioning reference signal resource may be valid in the first positioning area. In this way, when a terminal device moves in the first positioning area, the first positioning reference signal resource is not allocated to another terminal device.

For example, a positioning reference signal is an SRS, and duration of the timer may be a quantity of times of SRS transmission * a positioning periodicity. The quantity of times of SRS transmission is from request SRS transmission characteristics information. The request SRS transmission characteristics information is from a positioning device.

Optionally, the first message is a non-UE association message. For the non-UE association message, refer to the foregoing related descriptions.

Optionally, the first network device is a positioning device or a second access network device, and the second access network device is an access network device in a cell in which the terminal device is currently located.

In a possible implementation, the first network device is a positioning device. The second access network device determines a configuration of the first positioning reference signal resource and information about the first positioning area for the terminal device. The second access network device may send the configuration of the first positioning reference signal resource and the information about the first positioning area to the positioning device. Therefore, the positioning device may indicate, by using the first message, the first access network device to reserve the first positioning reference signal resource.

In this implementation, optionally, the duration of the timer may be determined by the second access network device. Alternatively, the duration of the timer is determined by the positioning device. Alternatively, the duration of the timer is default duration. It should be noted that, if the duration of the timer is determined by the second access network device, the second access network device sends the information about the timer to the positioning device.

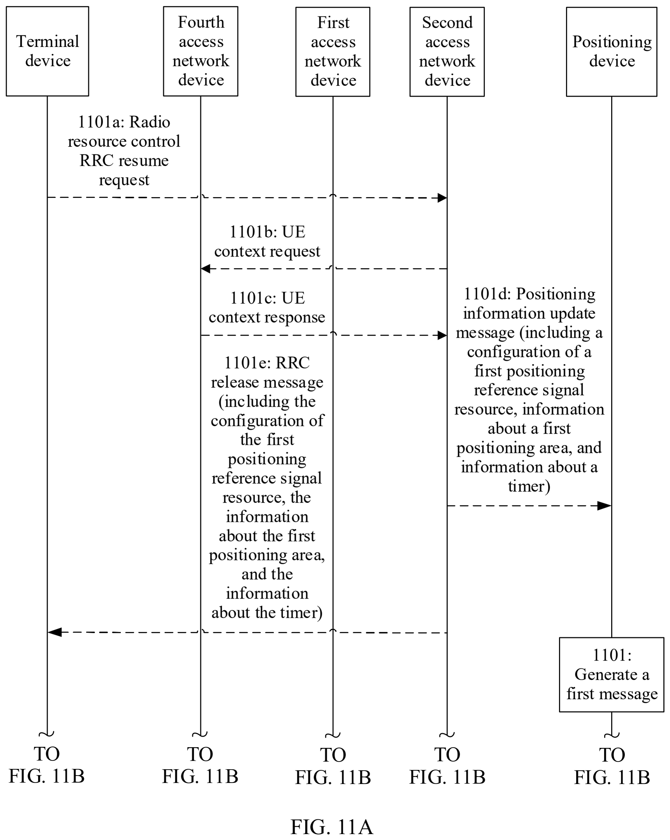

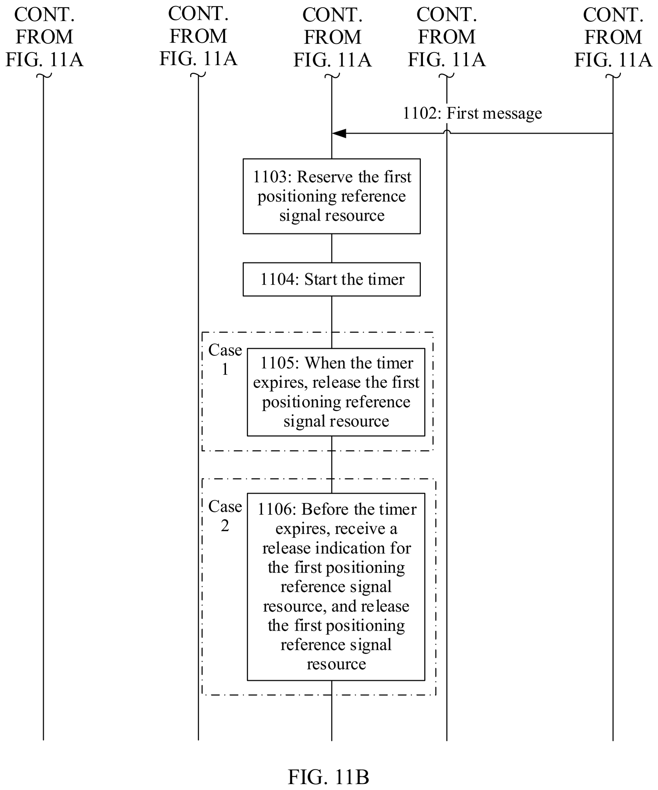

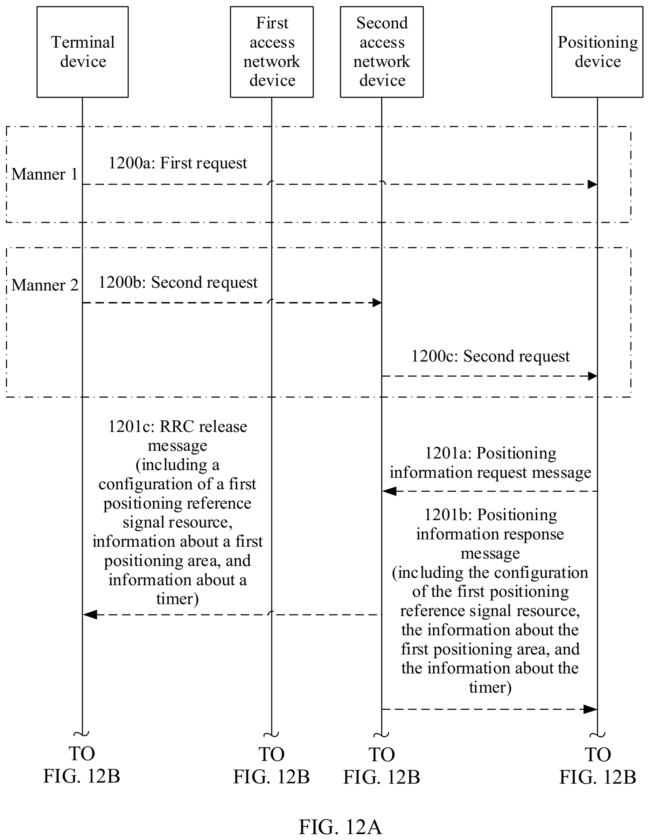

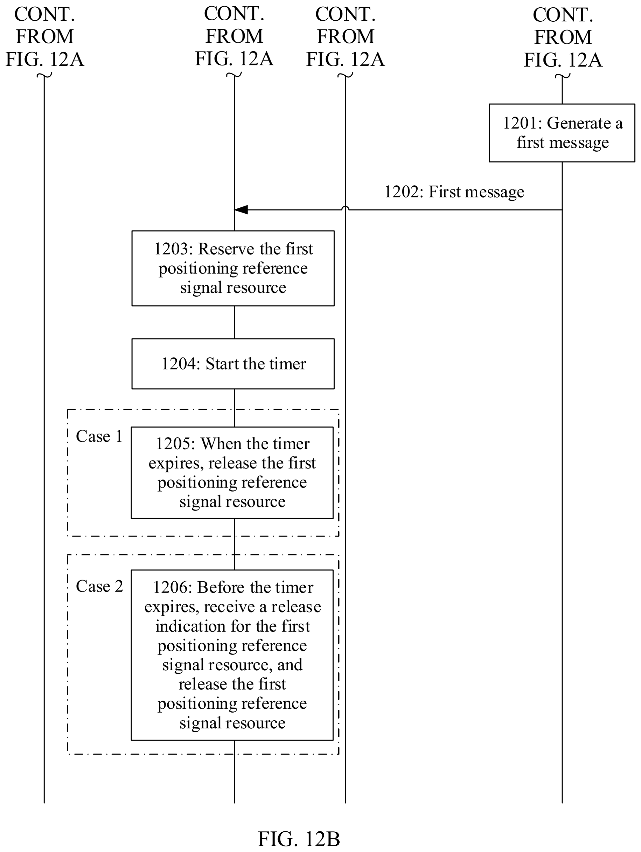

For related descriptions of this implementation, refer to the following related descriptions in the embodiments shown in FIG. 11A and FIG. 11B and FIG. 12A and FIG. 12B.

In another possible implementation, the first network device is a second access network device. The second access network device determines a configuration of the first positioning reference signal resource, information about the first positioning area, and the information about the timer for the terminal device. The second access network device may indicate, by using the first message, the first access network device to reserve the first positioning reference signal resource.

In this implementation, optionally, the duration of the timer may be determined by the second access network device, or the duration of the timer is default duration.

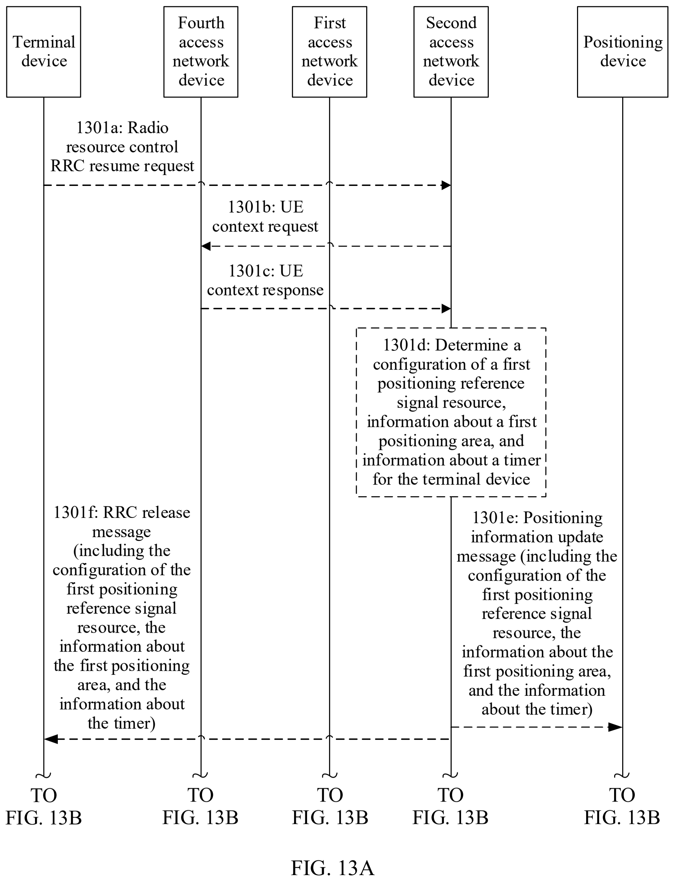

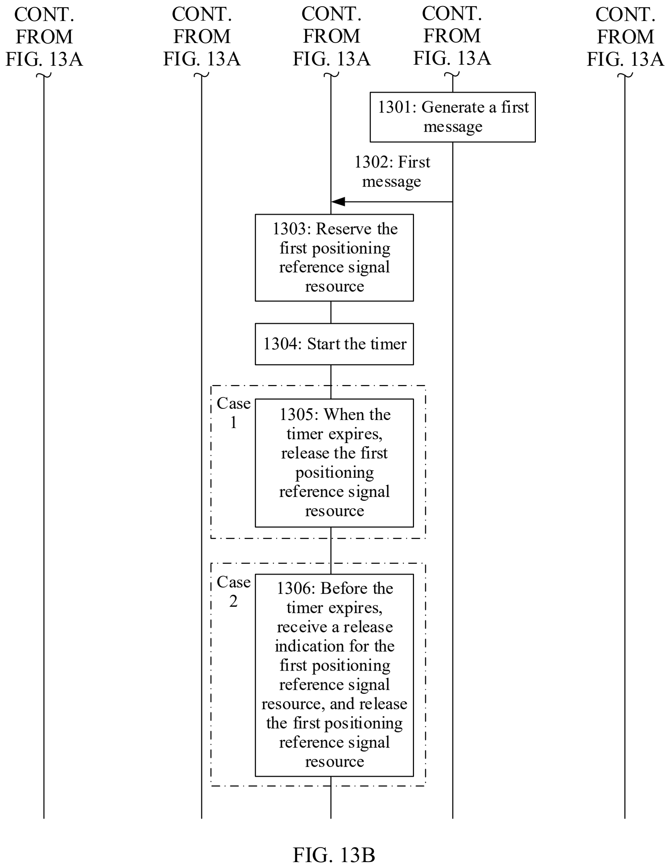

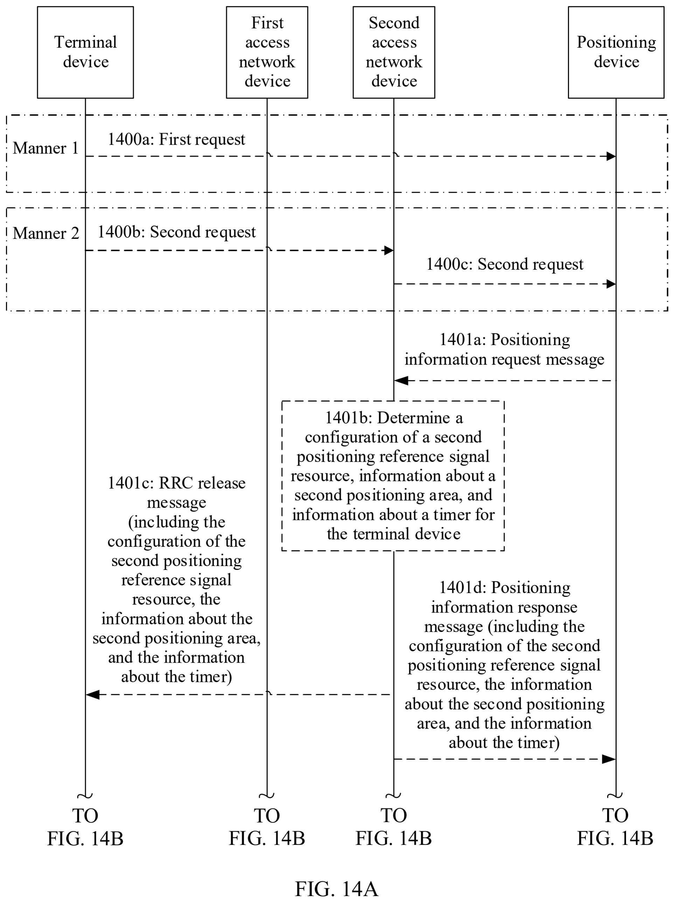

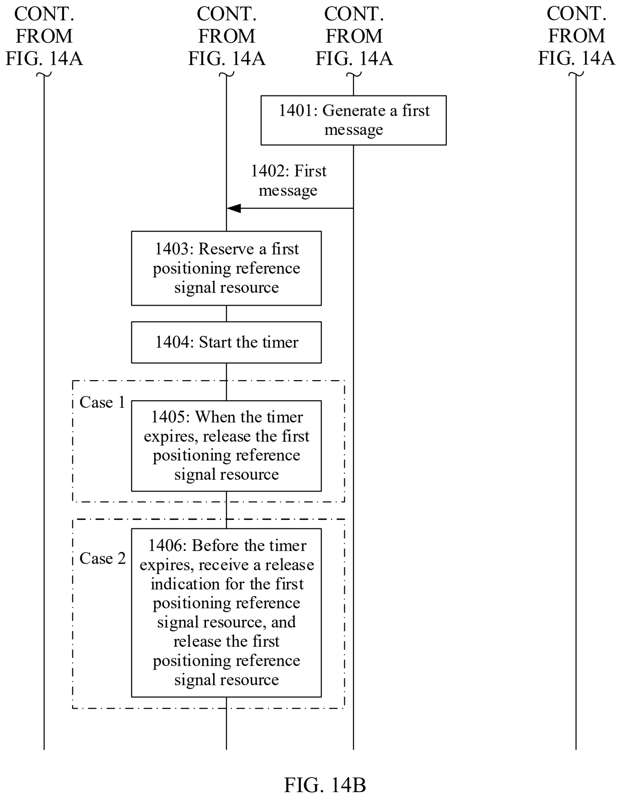

For related descriptions of this implementation, refer to the following related descriptions in the embodiments shown in FIG. 13A and FIG. 13B and FIG. 14A and FIG. 14B.

1002: The first network device sends the first message to the first access network device. Correspondingly, the first access network device receives the first message from the first network device.

The first access network device is an access network device in the first positioning area. For example, as shown in FIG. 4, the first positioning area includes the cell 1 to the cell 7. The first access network device manages the cell 1 to the cell 3. Therefore, the first network device may send the first message to the first access network device, so that the first access network device reserves the first positioning reference signal resource in the cell 1 to the cell 3.

Optionally, the first access network device may further send the first message to another access network device other than the first access network device in the first positioning area. Therefore, all access network devices in the first positioning area reserve the first positioning reference signal resource, to avoid a case in which a same positioning reference signal resource in the first positioning area is allocated to different terminal devices, and avoid positioning measurement interference.

Optionally, the first network device further sends at least one of the following to the first access network device: the configuration of the first positioning reference signal resource, an identifier of the configuration of the first positioning reference signal resource, a first identifier, a second identifier, an identifier of the first positioning area, or an identifier of at least one cell. For the configuration of the first positioning reference signal resource, the identifier of the configuration of the first positioning reference signal resource, and the identifier of the at least one cell, refer to the related descriptions in the embodiment shown in FIG. 3. The first identifier is an identifier used by the second access network device to identify the first positioning reference signal resource. For example, the first identifier is a RAN SRS ID. The second identifier is an identifier used by the first network device to identify the first positioning reference signal resource. For example, the second identifier is an LMF SRS ID.

It should be noted that optionally, at least one of the configuration of the first positioning reference signal resource, the identifier of the configuration of the first positioning reference signal resource, the identifier of the first positioning area, the first identifier, the second identifier, and the identifier of the at least one cell may be carried in the first message in step 1002.

1003: The first access network device reserves the first positioning reference signal resource.

For example, as shown in FIG. 4, the first positioning area includes the cell 1 to the cell 7. The first access network device manages the cell 1 to the cell 3. The identifier of the at least one cell includes an identifier of the cell 1, an identifier of the cell 2, and an identifier of the cell 3. Therefore, the first access network device may reserve the first positioning reference signal resource in the cell 1 to the cell 3.

1004: The first access network device starts the timer.

The first access network device starts the timer after receiving the first message. In another possible implementation, the first access network device starts the timer when the terminal device transmits the positioning reference signal for the first time.

The following describes operations performed by the first access network device with reference to two possible cases.

Case 1 is described below with reference to step 1005.

1005: When the timer expires, the first access network device releases the first positioning reference signal resource.

Optionally, when the timer expires, and a reservation indication for the first positioning reference signal resource is not received before the timer expires, the first access network device releases the first positioning reference signal resource.

It should be noted that, if the reservation indication for the first positioning reference signal resource is received before the timer expires, when the timer is reset, the first access network device continues to reserve the first positioning reference signal resource based on the reservation indication for the first positioning reference signal resource received by the first access network device before the timer expires.

Case 2 is described below with reference to step 1006.

1006: Before the timer expires, the first access network device receives a release indication for the first positioning reference signal resource, and the first access network device releases the first positioning reference signal resource.

It can be learned that, in the technical solution of this application, the first network device sends the first message to the first access network device. The first message includes the information about the timer, and the timer indicates the reservation duration of the first positioning reference signal resource. In this way, the first access network device determines the reservation duration of the first positioning reference signal resource with reference to the timer. When the timer expires, the first access network device may release the first positioning reference signal resource. Therefore, the first positioning reference signal resource is not always occupied, and impact on a cell capacity is avoided, to improve resource utilization.

FIG. 11A and FIG. 11B are a diagram of an eighth embodiment of a communication method according to an embodiment of this application. Refer to FIG. 11A and FIG. 11B. The method includes the following steps.

1101: A positioning device generates a first message.

Step 1101 is similar to step 1001 in the embodiment shown in FIG. 10. For details, refer to the related descriptions of step 1001 in the embodiment shown in FIG. 10.

Optionally, the embodiment shown in FIG. 11A and FIG. 11B further includes step 1101a to step 1101c. Step 1101a to step 1101c may be performed before step 1101.

1101a: A terminal device sends an RRC resume request to a second access network device. Correspondingly, the second access network device receives the RRC resume request from the terminal device.

1101b: The second access network device sends a UE context request to a fourth access network device. Correspondingly, the fourth access network device receives the UE context request from the second access network device.

Step 1101a and step 1101b are similar to step 501a and step 501b in the embodiment shown in FIG. 5. For details, refer to the related descriptions of step 501a and step 501b in the embodiment shown in FIG. 5.

1101c: The fourth access network device sends a UE context response to the second access network device. Correspondingly, the second access network device receives the UE context response from the fourth access network device.

The UE context response includes a UE context of the terminal device. The UE context response further includes positioning information of the terminal device. For example, the positioning information includes request SRS transmission characteristics (request SRS transmission characteristics) information. For the request SRS transmission characteristics information, refer to the related descriptions of step 501c in the embodiment shown in FIG. 5.

Optionally, the embodiment shown in FIG. 11A and FIG. 11B further includes step 1101d. Step 1101d may be performed before step 1101.

1101d: The second access network device sends a positioning information update message to the positioning device. The positioning information update message includes a configuration of a first positioning reference signal resource, information about a first positioning area, and information about a timer. Correspondingly, the positioning device receives the positioning information update message from the second access network device.

Optionally, the second access network device further sends at least one of the following to the positioning device: an identifier of the configuration of the first positioning reference signal resource, an identifier of the first positioning area, a first identifier, or a second identifier. The first identifier is an identifier used by the second access network device to identify the first positioning reference signal resource. The second identifier is an identifier used by the positioning device to identify the first positioning reference signal resource. For the configuration of the first positioning reference signal resource and the identifier of the configuration of the first positioning reference signal resource, refer to the related descriptions in the embodiment shown in FIG. 3.

Optionally, at least one of the identifier of the configuration of the first positioning reference signal resource, the identifier of the first positioning area, the first identifier, and the second identifier may be carried in the positioning information update message in step 1101d.

Optionally, if this embodiment includes step 1101a to step 1101c, step 1101d may be performed after step 1101c.

Before step 1101d, optionally, the second access network device determines the configuration of the first positioning reference signal resource, the information about the first positioning area, and the information about the timer based on the request SRS transmission characteristics information.

It should be noted that the foregoing descriptions are provided by using an example in which the second access network device determines the information about the timer. In actual application, the positioning device may alternatively determine the information about the timer independently. This is not specifically limited in this application.

Optionally, the embodiment shown in FIG. 11A and FIG. 11B further includes step 1101e. Step 1101e may be performed after step 1101c.

1101e: The second access network device sends an RRC release message to the terminal device. The RRC release message includes the configuration of the first positioning reference signal resource, the information about the first positioning area, and the information about the timer. Correspondingly, the terminal device receives the RRC release message from the second access network device.

The RRC release message is further used to release the terminal device to an RRC inactive state.

There is no fixed execution sequence between step 1101d and step 1101e. Step 1101d may be performed first, and then step 1101e is performed. Alternatively, step 1101e is performed first, and then step 1101d is performed. Alternatively, step 1101d and step 1101e are simultaneously performed based on a case. This is not specifically limited in this application.

In a possible implementation, step 1101a to step 1101e may be understood as a process in which the second access network device configures the positioning reference signal resource for the terminal device.

In another possible implementation, step 1101a to step 1101e may be understood as a process in which the second access network device updates the positioning reference signal resource for the terminal device. Before step 1101a to step 1101e, the fourth access network device has configured the positioning reference signal resource for the terminal device. For this implementation, in step 1101d, the second access network may not send the information about the timer to the positioning device. The positioning device may continue to use the timer sent to the positioning device in a process in which the fourth access network device configures the positioning reference signal resource for the terminal device. In step 1101e, the second access network device may not send the information about the timer to the terminal device. The terminal device may continue to use the timer sent to the terminal device in a process in which the fourth access network device configures the positioning reference signal resource for the terminal device.

Step 1102 to step 1106 in the embodiment shown in FIG. 11A and FIG. 11B are similar to step 1002 to step 1006 in the embodiment shown in FIG. 10. For details, refer to the related descriptions of step 1002 to step 1006 in the embodiment shown in FIG. 10. Details are not described herein again.

FIG. 12A and FIG. 12B are a diagram of a ninth embodiment of a communication method according to an embodiment of this application. Refer to FIG. 12A and FIG. 12B. The method includes the following steps.

1201: A positioning device generates a first message.

Step 1201 is similar to step 1001 in the embodiment shown in FIG. 10. For details, refer to the related descriptions of step 1001 in the embodiment shown in FIG. 10.

Optionally, the embodiment shown in FIG. 12A and FIG. 12B further includes step 1201a and step 1201b. Step 1201a and step 1201b may be performed before step 1201. 1201a: The positioning device sends a positioning information request message to a second access network device. Correspondingly, the second access network device receives the positioning information request message from the positioning device.

Step 1201a is similar to step 601a in the embodiment shown in FIG. 6. For details, refer to the related descriptions of step 601a in the embodiment shown in FIG. 6. Details are not described herein again.

1201b: The second access network device sends a positioning information response message to the positioning device. The positioning information response message includes a configuration of a first positioning reference signal resource, information about a first positioning area, and information about a timer. Correspondingly, the positioning device receives the positioning information response message from the second access network device.

Optionally, the second access network device further sends at least one of the following to the positioning device: an identifier of the configuration of the first positioning reference signal resource, an identifier of the first positioning area, a first identifier, or a second identifier. The first identifier is an identifier used by the second access network device to identify the first positioning reference signal resource. The second identifier is an identifier used by the positioning device to identify the first positioning reference signal resource. For the configuration of the first positioning reference signal resource and the identifier of the configuration of the first positioning reference signal resource, refer to the related descriptions in the embodiment shown in FIG. 3.

Optionally, at least one of the identifier of the configuration of the first positioning reference signal resource, the identifier of the first positioning area, the first identifier, and the second identifier may be carried in a positioning information update message in the foregoing step 1201c.

Optionally, the embodiment shown in FIG. 12A and FIG. 12B further includes step 1201c. Step 1201c may be performed after step 1201a.

1201c: The second access network device sends an RRC release message to a terminal device. The RRC release message includes the configuration of the first positioning reference signal resource, the information about the first positioning area, and the information about the timer. Correspondingly, the terminal device receives the RRC release message from the second access network device.

Specifically, after the second access network device receives the positioning information request message, the second access network device may determine the configuration of the first positioning reference signal resource, the information about the first positioning area, and the information about the timer for the terminal device. Then, the second access network device sends information about the configuration of the first positioning reference signal resource, the information about the first positioning area, and the information about the timer to the terminal device by using the RRC release message. The RRC release message is further used to release the terminal device to an RRC inactive state.

It should be noted that there is no fixed execution sequence between step 1201b and step 1201c. Step 1201c may be performed first, and then step 1201b is performed. Alternatively, step 1201b is performed first, and then step 1201c is performed. Alternatively, step 1201b and step 1201c are simultaneously performed based on a case. This is not specifically limited in this application.

In a possible implementation, step 1201a to step 1201c may be understood as a process in which the second access network device configures the positioning reference signal resource for the terminal device.

In another possible implementation, step 1201a to step 1201c may be understood as a process in which the second access network device updates the positioning reference signal resource for the terminal device. Before step 1201a to step 1201c, a last serving access network device of the terminal device has configured the positioning reference signal resource for the terminal device. For this implementation, in step 1201b, the second access network may not send the information about the timer to the positioning device. The positioning device may continue to use the information about the timer sent to the positioning device in a process in which the last serving access network device configures the positioning reference signal resource for the terminal device. In step 1201c, the second access network device may not send the information about the timer to the terminal device. The terminal device may continue to use the information about the timer sent to the terminal device in a process in which the last serving access network device configures the positioning reference signal resource for the terminal device.

Before step 1201a, the terminal device may request to configure or update the positioning reference signal resource. The following describes two request manners of the terminal device.

Manner 1 is described below with reference to step 1200a. Optionally, the embodiment shown in FIG. 12A and FIG. 12B further includes step 1200a. Step 1200a may be performed before step 1201a.

1201a: The terminal device sends a first request to the positioning device. Correspondingly, the positioning device receives the first request from the terminal device. Step 1200a is similar to step 600a in the embodiment shown in FIG. 6. For details, refer to the related description of step 600a in the embodiment shown in FIG. 6.

Manner 2 is described below with reference to step 1200b and step 1200c. Optionally, the embodiment shown in FIG. 12A and FIG. 12B further includes step 1200b and step 1200c. Step 1200b and step 1200c may be performed before step 1201a.

1200b: The terminal device sends a second request to the second access network device. Correspondingly, the second access network device receives the second request from the terminal device.

1200c: The second access network device sends the second request to the positioning device. Correspondingly, the positioning device receives the second request from the second access network device.

Step 1200b and step 1200c are similar to step 600b and step 600c in the embodiment shown in FIG. 6. For details, refer to the related descriptions of step 600b and step 600c in the embodiment shown in FIG. 6. Details are not described herein again.

Step 1202 to step 1206 in the embodiment shown in FIG. 12A and FIG. 12B are similar to step 1002 to step 1006 in the embodiment shown in FIG. 10. For details, refer to the related descriptions of step 1002 to step 1006 in the embodiment shown in FIG. 10. Details are not described herein again.

FIG. 13A and FIG. 13B are a diagram of a tenth embodiment of a communication method according to an embodiment of this application. Refer to FIG. 13A and FIG. 13B. The method includes the following steps.

1301: A second access network device generates a second message.

Step 1301 is similar to step 1001 in the embodiment shown in FIG. 10. For details, refer to the related descriptions of step 1001 in the embodiment shown in FIG. 10.

Optionally, the embodiment shown in FIG. 13A and FIG. 13B further includes step 1301a to step 1301c. Step 1301a to step 1301c may be performed before step 1301.

1301a: A terminal device sends an RRC resume request to the second access network device. Correspondingly, the second access network device receives the RRC resume request from the terminal device.

1301b: The second access network device sends a UE context request to a fourth access network device. Correspondingly, the fourth access network device receives the UE context request from the second access network device.

1301c: The fourth access network device sends a UE context response to the second access network device. Correspondingly, the second access network device receives the UE context response from the fourth access network device.

Step 1301a to step 1301c are similar to step 501a to step 501c in the embodiment shown in FIG. 5. For details, refer to the related descriptions of step 501a to step 501c in the embodiment shown in FIG. 5. Details are not described herein again.

Optionally, the embodiment shown in FIG. 13A and FIG. 13B further includes step 1301d. Step 1301d may be performed before step 1301.

1301d: The second access network device determines a configuration of a first positioning reference signal resource, information about a first positioning area, and information about a timer for the terminal device.

Optionally, the UE context response further includes positioning information of the terminal device. For example, the positioning information includes request SRS transmission characteristics (request SRS transmission characteristics) information. For the request SRS transmission characteristics information, refer to the related descriptions of step 501c in the embodiment shown in FIG. 5.

Optionally, if this embodiment further includes step 1301a to step 1301c, step 1301d may be performed after step 1301c. Step 1301d specifically includes: The second access network device determines the configuration of the first positioning reference signal resource, the information about the first positioning area, and the information about the timer based on the request SRS transmission characteristics information.

Optionally, the embodiment shown in FIG. 13A and FIG. 13B further includes step 1301e. Step 1301e may be performed after step 1301d.

1301e: The second access network device sends a positioning information update message to a positioning device. The positioning information update message includes the configuration of the first positioning reference signal resource, the information about the first positioning area, and the information about the timer. Correspondingly, the positioning device receives the positioning information update message from the second access network device.

Optionally, the embodiment shown in FIG. 13A and FIG. 13B further includes step 1301f. Step 1301f may be performed after step 1301d.

1301f: The second access network device sends an RRC release message to the terminal device. The RRC release message includes the configuration of the first positioning reference signal resource, the information about the first positioning area, and the information about the timer. Correspondingly, the terminal device receives the RRC release message from the second access network device.

The RRC release message is further used to release the terminal device to an RRC inactive state.

There is no fixed execution sequence between step 1301e and step 1301f. Step 1301e may be performed first, and then step 1301f is performed. Alternatively, step 1301f is performed first, and then step 1301e is performed. Alternatively, step 1301e and step 1301fare simultaneously performed based on a case. This is not specifically limited in this application.

In a possible implementation, step 1301a to step 1301f may be understood as a process in which the second access network device configures the positioning reference signal resource for the terminal device.

In another possible implementation, step 1301a to step 1301f may be understood as a process in which the second access network device updates the positioning reference signal resource for the terminal device. Before step 1301a to step 1301f, the fourth access network device has configured the positioning reference signal resource for the terminal device. For this implementation, in step 1301e, the second access network may not send the information about the timer to the positioning device. The positioning device may continue to use the information about the timer sent to the positioning device in a process in which the fourth access network device configures the positioning reference signal resource for the terminal device. In step 1301f, the second access network device may not send the information about the timer to the terminal device. The terminal device may continue to use the information about the timer sent to the terminal device in a process in which the fourth access network device configures the positioning reference signal resource for the terminal device.

Step 1302 to step 1306 in the embodiment shown in FIG. 13A and FIG. 13B are similar to step 1002 to step 1006 in the embodiment shown in FIG. 10. For details, refer to the related descriptions of step 1002 to step 1006 in the embodiment shown in FIG. 10. Details are not described herein again.

FIG. 14A and FIG. 14B are a diagram of an eleventh embodiment of a communication method according to an embodiment of this application. Refer to FIG. 14A and FIG. 14B. The method includes the following steps.

1401: A second access network device generates a first message.

Step 1401 is similar to step 1001 in the embodiment shown in FIG. 10. For details, refer to the related descriptions of step 1001 in the embodiment shown in FIG. 10.

Optionally, the embodiment shown in FIG. 14A and FIG. 14B further includes step 1401a and step 1401b. Step 1401a and step 1401b may be performed before step 1401.

1401a: A positioning device sends a positioning information request message to the second access network device. Correspondingly, the second access network device receives the positioning information request message from the positioning device.

Step 1401a is similar to step 601a in the embodiment shown in FIG. 6. For details, refer to the related descriptions of step 601a in the embodiment shown in FIG. 6. Details are not described herein again.

1401b: The second access network device determines a configuration of a first positioning reference signal resource, information about a first positioning area, and information about a timer for a terminal device.

Optionally, the embodiment shown in FIG. 14A and FIG. 14B further includes step 1401c. Step 1401c may be performed after step 1401b.

1401c: The second access network device sends an RRC release message to the terminal device. The RRC release message includes the configuration of the first positioning reference signal resource, the information about the first positioning area, and the information about the timer. Correspondingly, the terminal device receives the RRC release message from the second access network device.

Step 1401c is similar to step 1201b in the embodiment shown in FIG. 12A and FIG. 12B. For details, refer to the related descriptions of step 1201b in the embodiment shown in FIG. 12A and FIG. 12B.

Optionally, the embodiment shown in FIG. 14A and FIG. 14B further includes step 1401d. Step 1401d may be performed after step 1401b.

1401d: The second access network device sends a positioning information response message to the positioning device. The positioning information response message includes the configuration of the first positioning reference signal resource, the information about the first positioning area, and the timer. Correspondingly, the positioning device receives the positioning information response message from the second access network device.

There is no fixed execution sequence between step 1401c and step 1401d. Step 1401c may be performed first, and then step 1401d is performed. Alternatively, step 1401d is performed first, and then step 1401c is performed. Alternatively, step 1401c and step 1401d are simultaneously performed based on a case. This is not specifically limited in this application.

In a possible implementation, step 1401a to step 1401d may be understood as a process in which the second access network device configures the positioning reference signal resource for the terminal device.

In another possible implementation, step 1401a to step 1401d may be understood as a process in which the second access network device updates the positioning reference signal resource for the terminal device. Before step 1401a to step 1401d, a last serving access network device of the terminal device has configured the positioning reference signal resource for the terminal device. For this implementation, in step 1401d, the second access network may not send the information about the timer to the positioning device. The positioning device may continue to use the information about the timer sent to the positioning device in a process in which the last serving access network device configures the positioning reference signal resource for the terminal device. In step 1401c, the second access network device may not send the information about the timer to the terminal device. The terminal device may continue to use the information about the timer sent to the terminal device in a process in which the last serving access network device configures the positioning reference signal resource for the terminal device.

Before step 1401a, the terminal device may request to configure or update the positioning reference signal resource. The following describes two request manners of the terminal device.

Manner 1 is described below with reference to step 1400a. Optionally, the embodiment shown in FIG. 14A and FIG. 14B further includes step 1400a. Step 1400a may be performed before step 1401a.

1401a: The terminal device sends a first request to the positioning device. Correspondingly, the positioning device receives the first request from the terminal device. Step 1400a is similar to step 600a in the embodiment shown in FIG. 6. For details, refer to the related description of step 600a in the embodiment shown in FIG. 6.

Manner 2 is described below with reference to step 1400b and step 1400c. Optionally, the embodiment shown in FIG. 14A and FIG. 14B further includes step 1400b and step 1400c. Step 1400b and step 1400c may be performed before step 1401a.

1400b: The terminal device sends a second request to the second access network device. Correspondingly, the second access network device receives the second request from the terminal device.

1400c: The second access network device sends the second request to the positioning device. Correspondingly, the positioning device receives the second request from the second access network device.

Step 1400b and step 1400c are similar to step 600b and step 600c in the embodiment shown in FIG. 6. For details, refer to the related descriptions of step 600b and step 600c in the embodiment shown in FIG. 6. Details are not described herein again.

Step 1402 to step 1406 in the embodiment shown in FIG. 14A and FIG. 14B are similar to step 1002 to step 1006 in the embodiment shown in FIG. 10. For details, refer to the related descriptions of step 1002 to step 1006 in the embodiment shown in FIG. 10. Details are not described herein again.

The following describes communication apparatuses provided in embodiments of this application.

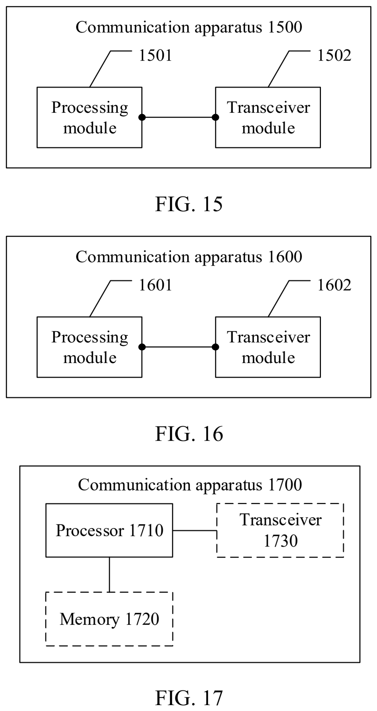

FIG. 15 is a diagram of a structure of a communication apparatus according to an embodiment of this application. Refer to FIG. 15. The communication apparatus may be configured to perform the processes performed by the first network device in the embodiments shown in FIG. 3 and FIG. 10, the processes performed by the positioning device in the embodiments shown in FIG. 5, FIG. 6, FIG. 7, FIG. 11A and FIG. 11B, and FIG. 12A and FIG. 12B, and the processes performed by the second access network device in the embodiments shown in FIG. 8, FIG. 9, FIG. 13A and FIG. 13B, and FIG. 14A and FIG. 14B. For details, refer to the related descriptions in the foregoing method embodiments.

The communication apparatus 1500 includes a processing module 1501 and a transceiver module 1502.

The processing module 1501 is configured to process data. The transceiver module 1502 may implement a corresponding communication function. The transceiver module 1502 may also be referred to as a communication interface or a communication module.

Optionally, the communication apparatus 1500 may further include a storage module. The storage module may be configured to store instructions and/or data. The processing module 1501 may read the instructions and/or the data in the storage module, so that the communication apparatus implements the foregoing method embodiments.

In a possible implementation, the communication apparatus 1500 may be configured to perform the actions performed by the first network device in the embodiments shown in FIG. 3 and FIG. 10. The communication apparatus 1500 may be the first network device or a component that may be configured in the first network device.

The processing module 1501 is configured to perform processing-related operations on a first network device side in the embodiments shown in FIG. 3 and FIG. 10. The transceiver module 1502 is configured to perform receiving and sending-related operations on the first network device side in the embodiments shown in FIG. 3 and FIG. 10.

In another possible implementation, the communication apparatus 1500 is configured to perform the actions performed by the positioning device in the embodiments shown in FIG. 5, FIG. 6, FIG. 7, FIG. 11A and FIG. 11B, and FIG. 12A and FIG. 12B. The communication apparatus 1500 may be the positioning device or a component that may be configured in the positioning device.

The processing module 1501 is configured to perform processing-related operations on a positioning device side in the embodiments shown in FIG. 5, FIG. 6, FIG. 7, FIG. 11A and FIG. 11B, and FIG. 12A and FIG. 12B. The transceiver module 1502 is configured to perform receiving and sending-related operations on the positioning device side in the embodiments shown in FIG. 5, FIG. 6, FIG. 7, FIG. 11A and FIG. 11B, and FIG. 12A and FIG. 12B.

In still another possible implementation, the communication apparatus 1500 may be configured to perform the actions performed by the second access network device in the embodiments shown in FIG. 8, FIG. 9, FIG. 13A and FIG. 13B, and FIG. 14A and FIG. 14B. The communication apparatus 1500 may be the second access network device or a component that may be configured in the second access network device.

The processing module 1501 is configured to perform processing-related operations on a second access network device side in the embodiments shown in FIG. 8, FIG. 9, FIG. 13A and FIG. 13B, and FIG. 14A and FIG. 14B. The transceiver module 1502 is configured to perform receiving and sending-related operations on the second access network device side in the embodiments shown in FIG. 8, FIG. 9, FIG. 13A and FIG. 13B, and FIG. 14A and FIG. 14B.

Optionally, the transceiver module 1502 may include a sending module and a receiving module. The sending module is configured to perform sending operations in the foregoing method embodiments. The receiving module is configured to perform receiving operations in the foregoing method embodiments.

It should be noted that the communication apparatus 1500 may include the sending module but not include the receiving module. Alternatively, the communication apparatus 1500 may include the receiving module but not include the sending module. This may be specifically determined depending on whether the foregoing solution performed by the communication apparatus 1500 includes a sending action and a receiving action.

In a possible implementation, the communication apparatus 1500 is configured to perform the following solution:
The processing module 1501 is configured to generate a first message, where the first message indicates to release a first positioning reference signal resource, and the first positioning reference signal resource is a to-be-released positioning reference signal resource in a first positioning area.

The transceiver module 1502 is configured to send the first message to a first access network device.

In another possible implementation, the communication apparatus 1500 is configured to perform the following solution:
The processing module 1501 is configured to generate a first message, where the first message is used to request a first access network device to reserve a first positioning reference signal resource, the first message includes information about a timer, the timer indicates reservation duration of the first positioning reference signal resource, the first positioning reference signal resource is a to-be-reserved positioning reference signal resource in a first positioning area, and the first access network device is an access network device in the first positioning area.

The transceiver module 1502 is configured to send the first message to the first access network device.

It should be understood that specific processes in which the modules perform the foregoing corresponding processes have been described in detail in the foregoing method embodiments. For brevity, details are not described herein again.

The processing module 1501 in the foregoing embodiment may be implemented as at least one processor or processor-related circuit. The transceiver module 1502 may be implemented as a transceiver or a transceiver-related circuit. The transceiver module 1502 may also be referred to as a communication module or a communication interface. The storage module may be implemented as at least one memory.

FIG. 16 is another diagram of a structure of a communication apparatus according to an embodiment of this application. Refer to FIG. 16. The communication apparatus may be configured to perform the processes performed by the first access network device in the embodiments shown in FIG. 3 and FIG. 5 to FIG. 14A and FIG. 14B. For details, refer to the related descriptions in the foregoing method embodiments.

The communication apparatus 1600 includes a processing module 1601 and a transceiver module 1602.

The processing module 1601 is configured to process data. The transceiver module 1602 may implement a corresponding communication function. The transceiver module 1602 may also be referred to as a communication interface or a communication module.

Optionally, the communication apparatus 1600 may further include a storage module. The storage module may be configured to store instructions and/or data. The processing module 1601 may read the instructions and/or the data in the storage module, so that the communication apparatus implements the foregoing method embodiments.

The communication apparatus 1600 may be configured to perform the actions performed by the first access network device in the embodiments shown in FIG. 3 and FIG. 5 to FIG. 14A and FIG. 14B. The communication apparatus 1600 may be the first access network device or a component that may be configured in the first access network device.

The processing module 1601 is configured to perform processing-related operations on a first access network device side in the embodiments shown in FIG. 3 and FIG. 5 to FIG. 14A and FIG. 14B. The transceiver module 1602 is configured to perform receiving and sending-related operations on the first access network device side in the embodiments shown in FIG. 3 and FIG. 5 to FIG. 14A and FIG. 14B.

Optionally, the transceiver module 1602 may include a sending module and a receiving module. The sending module is configured to perform sending operations in the foregoing method embodiments. The receiving module is configured to perform receiving operations in the foregoing method embodiments.

It should be noted that the communication apparatus 1600 may include the sending module but not include the receiving module. Alternatively, the communication apparatus 1600 may include the receiving module but not include the sending module. This may be specifically determined depending on whether the foregoing solution performed by the communication apparatus 1600 includes a sending action and a receiving action.

In a possible implementation, the communication apparatus 1600 is configured to perform the following solution:
The transceiver module 1602 is configured to receive a first message from a first network device, where the first message indicates the communication apparatus 1600 to release a first positioning reference signal resource, the first positioning reference signal resource is a to-be-released positioning reference signal resource in a first positioning area, and the communication apparatus 1600 is an access network device in the first positioning area.

The processing module 1601 is configured to release the first positioning reference signal resource.

In another possible implementation, the communication apparatus 1600 is configured to perform the following solution:
The transceiver module 1602 is configured to receive a first message from a first network device, where the first message is used to request the communication apparatus 1600 to reserve a first positioning reference signal resource, the first message includes information about a timer, the timer indicates reservation duration of the first positioning reference signal resource, the first positioning reference signal resource is a to-be-reserved positioning reference signal resource in a first positioning area, and the communication apparatus 1600 is an access network device in the first positioning area.

The processing module 1601 is configured to: reserve the first positioning reference signal resource; start the timer; and when the timer expires, release the first positioning reference signal resource.

It should be understood that specific processes in which the modules perform the foregoing corresponding processes have been described in detail in the foregoing method embodiments. For brevity, details are not described herein again.

The processing module 1601 in the foregoing embodiment may be implemented as at least one processor or processor-related circuit. The transceiver module 1602 may be implemented as a transceiver or a transceiver-related circuit. The transceiver module 1602 may also be referred to as a communication module or a communication interface. The storage module may be implemented as at least one memory.

An embodiment of this application further provides a communication apparatus 1700. Refer to FIG. 17. The communication apparatus 1700 includes a processor 1710. The processor 1710 is coupled to a memory 1720. The memory 1720 is configured to store a computer program or instructions and/or data. The processor 1710 is configured to execute the computer program or the instructions and/or the data stored in the memory 1720, so that the methods in the foregoing method embodiments are performed.

Optionally, the communication apparatus 1700 includes one or more processors 1710.

Optionally, as shown in FIG. 17, the communication apparatus 1700 may further include the memory 1720.

Optionally, the communication apparatus 1700 may include one or more memories 1720.

Optionally, the memory 1720 and the processor 1710 may be integrated or disposed separately.

Optionally, as shown in FIG. 17, the communication apparatus 1700 may further include a transceiver 1730. The transceiver 1730 is configured to receive and/or send a signal. For example, the processor 1710 is configured to control the transceiver 1730 to receive and/or send the signal.

In a possible implementation, the communication apparatus 1700 is configured to perform the operations performed by the first access network device in the foregoing method embodiments.

In another possible implementation, the communication apparatus 1700 is configured to perform the operations performed by the first network device in the embodiments shown in FIG. 3 and FIG. 10.

In still another possible implementation, the communication apparatus 1700 is configured to perform the operations performed by the positioning device in the embodiments shown in FIG. 5, FIG. 6, FIG. 7, FIG. 11A and FIG. 11B, and FIG. 12A and FIG. 12B.

In yet another possible implementation, the communication apparatus 1700 is configured to perform the operations performed by the second access network device in the embodiments shown in FIG. 8, FIG. 9, FIG. 13A and FIG. 13B, and FIG. 14A and FIG. 14B.

This application further provides a communication apparatus 1800. The communication apparatus 1800 may be a network device or a chip. The communication apparatus 1800 may be configured to perform the operations performed by the first access network device in the embodiments shown in FIG. 3 and FIG. 5 to FIG. 14A and FIG. 14B. Alternatively, the communication apparatus 1800 may be configured to perform the operations performed by the first network device in the embodiments shown in FIG. 3 and FIG. 10. Alternatively, the communication apparatus 1800 may be configured to perform the operations performed by the positioning device in the embodiments shown in FIG. 5, FIG. 6, FIG. 7, FIG. 11A and FIG. 11B, and FIG. 12A and FIG. 12B. Alternatively, the communication apparatus 1800 may be configured to perform the operations performed by the second access network device in the embodiments shown in FIG. 8, FIG. 9, FIG. 13A and FIG. 13B, and FIG. 14A and FIG. 14B.

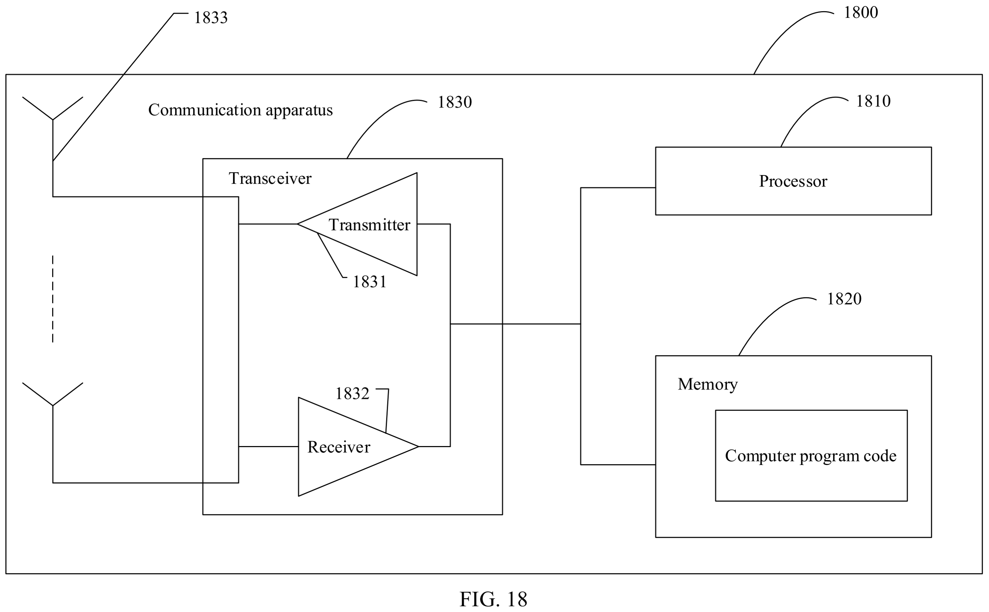

When the communication apparatus 1800 is a network device, for example, a base station, FIG. 18 is a simplified diagram of a structure of the base station. The base station includes a part 1810, a part 1820, and a part 1830.

The part 1810 is mainly configured to perform baseband processing, control the base station, and the like. The part 1810 is usually a control center of the base station, and may be usually referred to as a processor, and is configured to control the base station to perform processing operations on a first network device or first access network device side in the foregoing method embodiments.

The part 1820 is mainly configured to store computer program code and data.

The part 1830 is mainly configured to receive and send a radio frequency signal, and perform conversion between a radio frequency signal and a baseband signal. The part 1830 may be usually referred to as a transceiver module, a transceiver, a transceiver circuit, a transceiver machine, or the like. A transceiver module in the part 1830 may also be referred to as a transceiver, a transceiver machine, or the like, and includes an antenna 1833 and a radio frequency circuit (not shown in the figure). The radio frequency circuit is mainly configured to perform radio frequency processing. Optionally, in the part 1830, a component configured to implement a receiving function may be considered as a receiver, and a component configured to implement a sending function may be considered as a transmitter. In other words, the part 1830 includes a receiver 1832 and a transmitter 1831. The receiver may also be referred to as a receiving module, a receiver machine, a receiver circuit, or the like, and the transmitter may be referred to as a transmitting module, a transmitter machine, a transmitter circuit, or the like.

The part 1810 and the part 1820 may include one or more boards, and each board may include one or more processors and one or more memories. The processor is configured to read and execute a program in the memory to implement a baseband processing function and control the base station. If there are a plurality of boards, the boards may be interconnected with each other to enhance a processing capability. In an optional implementation, a plurality of boards may share one or more processors, a plurality of boards may share one or more memories, or a plurality of boards may simultaneously share one or more processors.

For example, in an implementation, the transceiver module in the part 1830 is configured to perform the receiving and sending-related processes performed by the first access network device in the embodiments shown in FIG. 3 and FIG. 5 to FIG. 14A and FIG. 14B. The processor in the part 1810 is configured to perform the processing-related processes performed by the first access network device in the embodiments shown in FIG. 3 and FIG. 5 to FIG. 14A and FIG. 14B.

For example, in another possible implementation, the transceiver module in the part 1830 is configured to perform the receiving and sending-related processes performed by the first network device in the embodiments shown in FIG. 3 and FIG. 10. The processor in the part 1810 is configured to perform the processing-related processes performed by the first network device in the embodiments shown in FIG. 3 and FIG. 10.

For example, in another possible implementation, the transceiver module in the part 1830 is configured to perform the receiving and sending-related processes performed by the second access network device in the embodiments shown in FIG. 8, FIG. 9, FIG. 13A and FIG. 13B, and FIG. 14A and FIG. 14B. The processor in the part 1810 is configured to perform the processing-related processes performed by the second access network device in the embodiments shown in FIG. 8, FIG. 9, FIG. 13A and FIG. 13B, and FIG. 14A and FIG. 14B.

It should be understood that FIG. 18 is merely an example rather than a limitation, and the network device including the processor, the memory, and the transceiver may not depend on the structure shown in FIG. 15, FIG. 16, or FIG. 18.

When the communication apparatus 1800 is a chip, the chip includes a transceiver, a memory, and a processor. The transceiver may be an input/output circuit or a communication interface. The processor is a processor, a microprocessor, or an integrated circuit integrated on the chip. In the foregoing method embodiments, a sending operation of the first network device, the first access network device, or the second access network device may be understood as an output of the chip, and in the foregoing method embodiments, a receiving operation of the first network device, the first access network device, or the second access network device may be understood as an input of the chip.

An embodiment of this application further provides a computer-readable storage medium. The computer-readable storage medium stores computer instructions used to implement the method performed by the first network device, the first access network device, the second access network device, or the positioning device in the foregoing method embodiments.

For example, when a computer program is executed by a computer, the computer is enabled to implement the method performed by the first network device, the first access network device, the second access network device, or the positioning device in the foregoing method embodiments.

An embodiment of this application further provides a computer program product including instructions. When the instructions are executed by a computer, the computer is enabled to implement the method performed by the first network device, the first access network device, the second access network device, or the positioning device in the foregoing method embodiments.

An embodiment of this application further provides a communication system. The communication system includes a first network device and a first access network device. The first network device is configured to perform some or all steps performed by the first network device in the embodiments shown in FIG. 3 and FIG. 10. The first access network device is configured to perform some or all steps performed by the first access network device in the embodiments shown in FIG. 3 and FIG. 10. Alternatively, the communication system includes a positioning device and a first access network device. The positioning device is configured to perform some or all steps performed by the positioning device in the embodiments shown in FIG. 5, FIG. 6, FIG. 7, FIG. 11A and FIG. 11B, and FIG. 12A and FIG. 12B. The first access network device is configured to perform some or all steps performed by the first access network device in the embodiments shown in FIG. 5, FIG. 6, FIG. 7, FIG. 11A and FIG. 11B, and FIG. 12A and FIG. 12B. Alternatively, the communication system includes a first access network device and a second access network device. The first access network device is configured to perform some or all steps performed by the first access network device in the embodiments shown in FIG. 8, FIG. 9, FIG. 13A and FIG. 13B, and FIG. 14A and FIG. 14B. The second access network device is configured to perform some or all steps performed by the second access network device in the embodiments shown in FIG. 8, FIG. 9, FIG. 13A and FIG. 13B, and FIG. 14A and FIG. 14B.

An embodiment of this application further provides a chip apparatus, including a processor, configured to invoke a computer program or computer instructions stored in a memory, so that the processor performs the methods provided in the embodiments shown in FIG. 3 and FIG. 5 to FIG. 14A and FIG. 14B.

In a possible implementation, an input of the chip apparatus corresponds to a receiving operation in any one of the embodiments shown in FIG. 3 and FIG. 5 to FIG. 14A and FIG. 14B, and an output of the chip apparatus corresponds to a sending operation in any one of the embodiments shown in FIG. 3 and FIG. 5 to FIG. 14A and FIG. 14B.

Optionally, the processor is coupled to the memory through an interface.

Optionally, the chip apparatus further includes the memory, and the memory stores the computer program or the computer instructions.

The processor mentioned above may be a general-purpose central processing unit, a microprocessor, an application-specific integrated circuit (application-specific integrated circuit, ASIC), or one or more integrated circuits configured to control program execution of the method provided in any one of the embodiments shown in FIG. 3 and FIG. 5 to FIG. 14A and FIG. 14B. The memory mentioned in any one of the foregoing may be a read-only memory (read-only memory, ROM), another type of static storage device that can store static information and instructions, a random access memory (random access memory, RAM), or the like.

It can be clearly understood by persons skilled in the art that, for convenient and brief description, for explanations and beneficial effects of related content in any one of the communication apparatuses provided above, refer to the corresponding method embodiments provided above. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication method, wherein the method comprises:
generating, by a first network device, a first message, wherein the first message indicates to release a first positioning reference signal resource, the first positioning reference signal resource is a to-be-released positioning reference signal resource in a first positioning area, and the first access network device is an access network device in the first positioning area; and
sending, by the first network device, the first message to the first access network device.

2. A communication method, wherein the method comprises:
receiving, by a first access network device, a first message from a first network device, wherein the first message indicates the first access network device to release a first positioning reference signal resource, the first positioning reference signal resource is a to-be-released positioning reference signal resource in a first positioning area, and the first access network device is an access network device in the first positioning area; and
releasing, by the first access network device, the first positioning reference signal resource.

3. The method according to claim 1 or 2, wherein a format of the first message indicates to release the first positioning reference signal resource; or the first message comprises first indication information, and the first indication information indicates to release the first positioning reference signal resource.

4. The method according to claim 1 or 3, wherein the method further comprises:
sending, by the first network device, the first message to all access network devices except the first access network device in the first positioning area.

5. The method according to claim 1, 3, or 4, wherein the method further comprises:
sending, by the first network device, at least one of the following to the first access network device: a configuration of the first positioning reference signal resource, an identifier of the configuration of the first positioning reference signal resource, a first identifier, a second identifier, an identifier of the first positioning area, or an identifier of at least one cell, wherein the first identifier is an identifier used by the first network device to identify the first positioning reference signal resource, the second identifier is an identifier used by the first access network device to identify the first positioning reference signal resource, and the at least one cell belongs to the first positioning area.

6. The method according to any one of claims 1 and 3 to 5, wherein the method further comprises:
receiving, by the first network device, a second message from the first access network device, wherein the second message indicates that the first positioning reference signal resource is successfully released or fails to be released.

7. The method according to any one of claims 1 to 6, wherein the first network device is a positioning device; or the first network device is a serving access network device of a terminal device.

8. The method according to any one of claims 1 and 3 to 6, wherein the first network device is a positioning device, and before generating, by the first network device, the first message, the method further comprises:
receiving, by the positioning device, a positioning information update message or a positioning information response message from a second access network device, wherein the positioning information update message or the positioning information response message comprises a configuration of a second positioning reference signal resource and/or information about a second positioning area, the configuration of the second positioning reference signal resource is different from the configuration of the first positioning reference signal resource, and/or the first positioning area is different from the second positioning area, the configuration of the second positioning reference signal resource and/or the information about the second positioning area are/is separately obtained through update or configuration of the second access network device for a terminal device, the configuration of the first positioning reference signal resource and information about the first positioning area are separately used by the terminal device before the update or configuration, and the second access network device is a serving access network device of the terminal device.

9. The method according to claim 8, wherein before receiving, by the positioning device, the positioning information update message or the positioning information response message from the second access network device, the method further comprises:
receiving, by the positioning device, an update request from the terminal device, wherein the update request is used to request to update a positioning reference signal resource; and
sending, by the positioning device, a positioning information request message to the second access network device, wherein the positioning information request message is used to request to configure a positioning reference signal resource for the terminal device.

10. The method according to any one of claims 1 and 3 to 6, wherein the first network device is a positioning device, and before generating, by the first network device, the first message, the method further comprises:
receiving, by the positioning device, a measurement failure message or a measurement failure indication message from a third access network device, wherein the measurement failure message or the measurement failure indication message indicates that the third access network device fails to measure a positioning reference signal sent by a terminal device on the first positioning reference signal resource.

11. The method according to any one of claims 1 and 3 to 6, wherein the first network device is a positioning device, and before generating, by the first network device, the first message, the method further comprises:
receiving, by the positioning device, a positioning information update message from a second access network device, wherein the positioning information update message indicates that the terminal device stops sending a positioning reference signal on the first positioning reference signal resource.

12. The method according to any one of claims 1 and 3 to 6, wherein the first network device is a serving access network device of a terminal device, and before generating, by the first network device, the first message, the method further comprises:
determining, by the first network device, a configuration of a second positioning reference signal resource and/or information about a second positioning area for the terminal device, wherein the configuration of the second positioning reference signal resource is different from the configuration of the first positioning reference signal resource, and/or the first positioning area is different from the second positioning area, and the configuration of the first positioning reference signal resource and information about the first positioning area are separately used by the terminal device before the first network device determines the configuration of the second positioning reference signal resource and/or the information about the second positioning area for the terminal device.

13. The method according to claim 2, 3, or 7, wherein the method further comprises:
sending, by the first access network device, the second message to the first network device, wherein the second message indicates that the first positioning reference signal resource is successfully released or fails to be released.

14. A communication apparatus, wherein the communication apparatus comprises a transceiver module and a processing module, wherein
the transceiver module is configured to perform the receiving and sending operations according to any one of claims 1 and 3 to 12, and the processing module is configured to perform the processing operation according to any one of claims 1 and 3 to 12; or
the transceiver module is configured to perform the receiving and sending operations according to claim 2, 3, 7, or 13, and the processing module is configured to perform the processing operation according to claim 2, 3, 7, or 13.

15. A communication apparatus, wherein the communication apparatus comprises a processor, and the processor is configured to execute a computer program or computer instructions in a memory, to perform the method according to any one of claims 1 and 3 to 12, or perform the method according to claim 2, 3, 7, or 13.

16. The communication apparatus according to claim 15, wherein the communication apparatus further comprises the memory.

17. A computer-readable storage medium, wherein the computer-readable storage medium stores a computer program; and when the computer program is executed by a communication apparatus, the communication apparatus is enabled to perform the method according to any one of claims 1 and 3 to 12, or the communication apparatus is enabled to perform the method according to claim 2, 3, 7, or 13.
